(19) **Europäisches Patentamt / European Patent Office / Office européen des brevets**

(11) **EP 4 103 920 B1**

(12) # EUROPEAN PATENT SPECIFICATION

(45) Date of publication and mention of the grant of the patent:
**02.04.2025 Bulletin 2025/14**

(21) Application number: **21703719.1**

(22) Date of filing: **10.02.2021**

(51) International Patent Classification (IPC):
**G01J 3/02** *(2006.01)* **G01N 21/03** *(2006.01)*
**G01J 3/45** *(2006.01)* **G01J 3/453** *(2006.01)*
**G01N 21/35** *(2014.01)*

(52) Cooperative Patent Classification (CPC):
**G01J 3/4532; G01J 3/0218; G01J 3/45; G01J 3/4537;** G01N 2021/3595

(86) International application number:
**PCT/EP2021/053248**

(87) International publication number:
**WO 2021/160697 (19.08.2021 Gazette 2021/33)**

(54) **SPECTROSCOPIC METHOD TO ANALYSE A RADIATION HAVING AN UNKNOWN CHARACTERISTIC**

SPEKTROSKOPISCHES VERFAHREN ZUR ANALYSE EINER STRAHLUNG, DIE EINE UNBEKANNTE CHARAKTERISTIK AUFWEIST

PROCÉDÉ SPECTROSIQUE D'ANALYSE DE RAYONNEMENT DE CARACTÉRISTIQUE INCONNUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2020 IT 202000002560**

(43) Date of publication of application:
**21.12.2022 Bulletin 2022/51**

(73) Proprietor: **Consiglio Nazionale Delle Ricerche 00185 Roma (IT)**

(72) Inventors:
- **MALARA, Pietro**
  **80078 Pozzuoli (NA) (IT)**
- **GAGLIARDI, Gianluca**
  **80123 NAPOLI (IT)**
- **GIORGINI, Antonio**
  **80137 NAPOLI (IT)**
- **AVINO, Saverio**
  **80035 Nola (NA) (IT)**

- **DE NATALE, Paolo**
  **59100 Prato (IT)**

(74) Representative: **Biallo, Dario et al Barzanò & Zanardo S.p.A. Via Borgonuovo, 10 20121 Milano (IT)**

(56) References cited:
**US-A- 5 696 582** **US-A- 5 757 488**

- **PRETER E ET AL: "Fiber-Optic Evaporation Sensing: Monitoring Environmental Conditions and Urinalysis", JOURNAL OF LIGHTWAVE TECHNOLOGY, vol. 34, no. 19, 2016, USA, pages 4486 - 4492, XP055733001, ISSN: 0733-8724, DOI: 10.1109/JLT.2016.2535723**
- **P. MALARA ET AL: "A self-operating broadband spectrometer on a droplet", NATURE COMMUNICATIONS, vol. 11, no. 1, 8 May 2020 (2020-05-08), XP055733148, DOI: 10.1038/ s41467-020-16206-8**

**Description**

Technical field

The present invention relates to a spectroscopy method where a liquid specimen is used to analyze a radiation source in the wavelength domain. The spectral information so obtained, i.e. the distribution of the radiation intensity at different wavelengths, can be used to determine the frequency of an unknown radiation source or to assess quantitatively the interaction of the radiation with matter.

Technological background

Detecting the spectral power distribution of a radiation and its modifications after interaction with matter is one of the founding techniques of experimental science. The uncountable scientific and industrial applications that require to investigate or identify specific chemical compounds have stimulated the development of an enormous variety of spectrometers, from scanning grating monochromators, optical spectrum analyzers, dispersion spectrometers, virtual image phase arrays, to the different types of Fourier transform spectrometers. Although each type has its own features of resolution, velocity, sensitivity and working wavelength region, they all serve the specific purpose of assessing the radiation power transmitted at different wavelengths.

In recent years a large number of miniaturized on-chip and fibre-optic based spectrometers have appeared in scientific literature. This trend, fueled by the advances of nanofabrication techniques and integrated photonics, is driving spectro-chemical analysis out of the laboratories, opening the way to many spectroscopic applications on-site. Several microspectrometer architectures have to date been presented in literature, corresponding to different trade-offs among spectral resolution, bandwidth, cost and portability. Most of commercial devices are based on a spectrum-splitting principle: a dispersive element (e.g., a diffraction grating, a prism, a random scattering medium or a combination of the above) splits a polychromatic radiation input into different spectral channels and a detector measures the intensity at each channel. In contrast, Fourier Transform (FT) spectrometers employ an interferometer with a variable-length arm; as the Optical Pathlength Difference (OPD) between the arms changes, an interferogram is produced at the instrument output that is equivalent to the FT of the incident radiation spectrum. As opposed to dispersive spectrometers, FT-based devices have no direct correspondence between the recorded data points and the spectral channel. Such a non-sequential, multiplexed approach results in an enhanced signal-to-noise ratio (SNR), known as Fellgett advantage. If on one hand FT spectrometers are more appealing, on the other they require mechanical moving parts that represent a non-negligible issue for miniaturization. Micro-electro mechanical systems technology (MEMS) has first taken up the challenge, allowing to realize in the last two decades several FT interferometers with 10-20 cm$^{-1}$ resolution on a chip scale. More recently, a generation of FT microspectrometers with no moving parts has followed, to address the robustness issues connected with the mechanical tuning of MEMS. These devices, mostly fabricated by e-beam lythography, use arrays of Mach-Zender interferometers with fixed OPD or single interferometers with electro/thermo-optic refractive index tuning.

US5757488 describes a method for calibrating power spectral data with an interferometer based Fourier transform spectrometer which utilizes a laser based coherent radiant source as the metrology source. A radiant beam of predetermined wavelength from a neon lamp based non coherent radiant source is directed in parallel with a radiant beam from the laser source into the interferometer to create a laser based interference pattern and a neon lamp based interference pattern. Distinct fringe counts are derived from the laser based interference pattern and the neon lamp based interference pattern. The wavelength of the laser source is determined based on a correlation between the known wavelength of the neon lamp based interference pattern and the determined fringe counts. The scale of the power spectral data is calibrated based on the determined wavelength of the laser source.

Document Peter E. et al "Fiber-Optic Evaporation Sensing: Monitoring Environmental Conditions and Urinalysis", Journal of Lightwave Technology, vol. 34, no.19, 2016, pages 4486-4492, describes the monitoring of the evaporation dynamics of subnanoliter chained droplets from the cleaved facet of a standard fiber by reflectivity measurements of incident light.

Summary of invention

The present invention relates to the field of spectroscopic methods where substantially only non-moving parts are required. The non-moving part refers to the irradiating and/or detecting portion of the apparatus used to obtain spectroscopic information of a sample according to the method of the invention. Having an apparatus where only non-moving parts are required, simplifies the construction of it and allows its use also in conditions where electricity might not be available. Further, a goal of the invention is to provide a method for spectroscopy requiring an apparatus having a relatively low cost to perform the method itself.

According to an aspect, the invention relates to a spectroscopic method to analyse a radiation having an unknown characteristic as defined with appended independent claim 1, the method comprising - *inter alia* and as further defined with claim 1 -

- providing a substrate defining a first surface;
- providing a liquid specimen defining a second surface;
- impinging the liquid specimen and the substrate with a first electromagnetic radiation having a known wavelength so that the first electromagnetic radiation is reflected on the first and on the second surface;
- impinging the liquid specimen and the substrate with a second electromagnetic radiation to be analysed and having an unknown characteristic, the second electromagnetic radiation having a second wavelength, so that the second electromagnetic radiation is reflected on the first and on the second surface;
- varying the location of the second surface with respect to the first surface;
- detecting a first plurality of data forming a first interferogram having a first plurality of fringes relative to the interference of the reflections of the first electromagnetic radiation on the first and on the second surface during the variation in location of the second surface;
- detecting a second plurality of data forming a second interferogram having a second plurality of fringes relative to the interference of the reflections of the second electromagnetic radiation on the first and on the second surface during the variation in location of the second surface;
- determining, from the position of the fringes in the first interferogram, a time-length transformation which transforms the time scale of the first interferogram into a length scale; and
- applying the time-length transformation to the second plurality of data forming the second interferogram.

Furthermore, the method comprises:

- determining and applying a transformation of the points of the second interferogram so that the second interferogram becomes a signal that is independent from the position and shape of the second surface, and that oscillates around a constant value.

Spectroscopy concerns the investigation and measurement of the interaction of electromagnetic radiation with matter. The types of spectroscopy are categorized according to the type of radiation involved in the interaction. These include but are not limited to ultraviolet/visible spectroscopy, infrared spectroscopy or nuclear magnetic resonance spectroscopy.

In many applications, the spectrum is determined by measuring changes in the intensity or frequency of this energy. The types of energy studied include electromagnetic radiation and the corresponding spectroscopy is called electromagnetic spectroscopy. It also includes other radiations as well (such as particles or acoustic waves).

Techniques that employ electromagnetic radiation are typically classified by the wavelength region of the spectrum.

Further, spectroscopy can be classified as emission spectroscopy or absorption spectroscopy.

Emission is the process by which a higher energy quantum mechanical state of a molecule becomes converted to a lower one through the emission of a photon, resulting in the production of light. The frequency of light emitted is a function of the energy of the transition. Since energy must be conserved, the energy difference between the two states equals the energy carried off by the photon. The energy states of the transitions can lead to emissions over a very large range of frequencies. For example, visible light is emitted by the coupling of electronic states in atoms and molecules (then the phenomenon is called fluorescence or phosphorescence). An excitation beam can in this case cause the emission of photons by the sample.

Absorption spectroscopy refers to spectroscopic techniques that measure the absorption of radiation, as a function of frequency or wavelength, due to its interaction with a sample. The sample absorbs energy, i.e., photons, from the radiating field. The intensity of the absorption varies as a function of frequency, and this variation is the absorption spectrum. The absorption spectrum can be derived from a scattering or reflection spectrum.

The present invention relates to both emission and absorption spectroscopy.

One of the most basic tasks in spectroscopy is to characterize the spectrum of a sample (source): how much electromagnetic radiation is emitted by the sample (source) at each different wavelength. Further, it may relate to investigate the wavelength of a radiation emitted by a sample (source) and/or the intensity of such radiation.

In other words, the invention relates to any spectroscopic spectrum that is obtainable from a sample detecting the photons transmitted or reflected from the sample (obtained for example directing a excitation beam on it or in any other known way). The invention also relates to the investigation of any electromagnetic radiation emitted by a source.

In the present invention therefore, an electromagnetic radiation emitted by sample or by a source is studied, and spectroscopic information from the same are obtained.

For this purpose, a liquid specimen is provided. The liquid specimen can be for example a droplet of liquid or it can be a given liquid quantity contained inside a capillary or a container. Other embodiments are possible as well. The liquid specimen may be in contact to a substrate, for example the substrate on which the droplet is deposited or the bottom of the container. Alternatively, a gap is present between the liquid specimen and the substrate. The gap can be filled with a gas, such as air. Regardless of the shape of the liquid specimen, which can be arbitrary, the substrate and the liquid specimen identify two surfaces, a first and a second surface. The substrate defines the first interface, that is, the first surface includes part of the substrate. The first surface may correspond to a substrate-liquid interface, that is, the interface present between the substrate in contact to the liquid specimen and the liquid specimen itself. Alternatively, the first surface is the interface between the substrate and the gas present between the liquid specimen and the substrate, so it can be a substrate-gas interface. The liquid specimen defines the second interface, that is, the second surface includes part of the liquid specimen. The second surface may correspond to the liquid-gas interface, that is, the interface between the given quantity of liquid and the gas present around the liquid specimen, for example the liquid-air interface if the liquid specimen is surrounded by air. Thus the second interface is always liquid-gas interface regardless of whether the liquid specimen is in contact to the substrate or not.

Further, the first and second surface are relatively located with respect to each other so that a radiation can impinge both of them at the same time.

Towards the liquid specimen and the substrate, a first electromagnetic radiation having a known wavelength is directed. This first electromagnetic radiation is known, and it has the function of a "reference" radiation. The first electromagnetic radiation impinges on the substrate and on the liquid specimen and it is partially reflected at the first and second surface, that is, at the interfaces above defined. The specimen and the substrate are so located that the first electromagnetic radiation, while travelling, can impinge them both. For example, either the liquid specimen is in contact to the substrate or the liquid specimen and the substrate form a gap therebetween. Thus, the first electromagnetic radiation forms a first reflected radiation at the first interface and a second reflected radiation at the second interface (first and second reflected radiations are also called "back-reflected" radiations). Of the first and second reflected radiations on the first and second surface, a fraction of them couples back and interferes. If this reflected and interfering radiation is detected, it defines a first plurality of data forming a first interferogram. In other words, the first and second reflected radiations form an interference pattern and thus form maximum and minimum of the interference, which can be displayed in an interferogram.

However, although the radiation reflected from the first surface remains the same over time, this is not true for the radiation reflected by the second surface. In other words, the first plurality of data does not contain always the same datum repeated over time, because the second surface "moves".

Indeed, the liquid specimen includes a quantity of liquid defining a second surface. This second surface defines a given location with respect to the first surface, which changes in time. This variation may be due to a variation of the amount of liquid in the liquid specimen. Alternatively, it may be due to a displacement of a part (of a certain amount) of the liquid specimen. As this variation takes place, the first and second interferograms are recorded. The variation in the location of the second surface with respect to the first surface may be due to different phenomena. For example, the liquid specimen may be subject to evaporation, so that the total amount of liquid in the liquid specimen changes (decreases). Therefore, the surface of the liquid specimen in contact with the surrounding gas changes its location due to the "shrinking" of the specimen caused by evaporation. The evaporation can be spontaneous or induced or a combination of the two. In the induced evaporation, heat or pressure can be applied to the environment where the liquid specimen is present so as to trigger and/or accelerate and/or decelerate the evaporation of the same. Due to the evaporation, the second interface changes location and shape. For example, while the substrate-liquid surface has a fixed position, the liquid-air (or gas) surface is modified, because the amount of liquid in the liquid specimen is reduced due to evaporation. The second surface thus recedes as the liquid evaporates. Alternatively, the liquid specimen varies the amount of liquid it contains due to a liquid flow out of a container, such as a tank. For example, the liquid specimen is located within an open container, having an outlet. The outlet may be located at the bottom of the container. If the container is filled (the liquid filling the container defines the liquid specimen) and then the outlet is opened, the upper surface of the liquid in the container - defining the second surface - varies location till the container is emptied by the flow of liquid through the outlet. In a third embodiment, the substrate may face a capillary full of liquid. The liquid filling the capillary defines the liquid specimen. Between the end of the liquid column present in the capillary and the substrate, an air gap is present. The liquid specimen forms a meniscus at a given height in the capillary at a given instant in time. The meniscus defines the second surface. The air gap is closed by the liquid which rises due to capillary effect inside the capillary. Thus the second surface location may change due to evaporation, capillary effect, emptying a container, or others. The above are only examples and any other mechanism can be used, so that the location of the second surface changes.

If the detection of the total intensity back-reflected by the first and second surface continues over time, the interference between the first radiation reflected by the first surface and the first radiation reflected by the second surface produces a first interferogram. An interferogram may be defined as a pattern of alternating intensity maxima and minima of the interference between the first radiation reflected by the first surface and the radiation reflected by the second surface over time, where each period is commonly known as "fringe". Whenever the liquid second surface recedes by a length corresponding to one reference wavelength (i.e., of a length corresponding to the wavelength of the first electromagnetic radiation), the phase relation between the two interfering first and second reflected radiations repeats, and a new fringe appears in the back-reflected intensity.

The second surface in its location variations preferably gets closer to the first surface. In one embodiment, a container is positioned on the surface, and the container is filled with the liquid specimen. The bottom of the container is in contact with the substrate defining the frist surface. The upper level of the liquid in the container defines the second surface. While the container is emptying, the second surface lowers and gets towards the bottom on the container, that is, it moves towards the first surface. In another example, a capillary is located with an end in front of a substrate defining the first surface. The meniscus of liquid formed at the end of the capillary defines the second surface. An air gap is present between the liquid specimen in the capillary and the substrate. The capillary effect is such that the upper level of liquid in the capillary approaches the substrate, so that the second surface approaches the first surface. Alternatively, a droplet is positioned on the substrate and it evaporates, so that the second surface approaches the first while evaporating.

The first plurality of data is the time-domain interferogram of the first radiation. Because it provides a direct relation between the time and the position of the liquid second surface, this reference interferogram codifies the whole history of the liquid specimen's variation dynamics. It is indeed possible to reconstruct position and shift of the second surface due to emptying of a container, shift of the second surface due to droplet evaporation, shift of the second surface due to capillary effect (and others) by simply evaluating the number of fringes from the corresponding point of the first interferogram to the end of the first interferogram (corresponding to the point where the first interface and the second interface coincides, that is, when the second surface in its movements becomes coincident to the first surface), as shown for example in Preter, E. et al. "Fibre-Optic Evaporation Sensing: Monitoring Environmental Conditions and Urinalysis." J. Light. Technol. 34, 4486-4492 (2016).

Simultaneously to the first radiation, a second electromagnetic radiation, having an unknown characteristic, for example having an unknown wavelength distribution or an unknown intensity or both, is directed towards the liquid specimen and the substrate. The second radiation may include a single wavelength radiation or more than one radiation at different wavelengths. The second radiation includes at least a wavelength, called second wavelength. This wavelength is preferably different from the wavelength of the first radiation. The same phenomenon described with reference to the first electromagnetic radiation takes place: the second electromagnetic radiation impinges on the liquid specimen and substrate and it is partially reflected at the first and second surface giving rise to a first and a second reflected radiation at the first and second surface, that is, at the interfaces above defined. Of the reflected radiation on the first and second surface, a fraction couples back and interferes. If this reflected and interfering radiation is detected, it defines a second plurality of data forming a second interferogram, as above detailed. The first and the second interferogram are recorded together during the variation in location of the second surface, that is, the first and the second interferogram are recorded simultaneously.

The first and second plurality of data can also be called a first and second array of datapoints, as detailed below. These first and second arrays are in the time domain.

The apparatus above described, where the first and second interferogram can be detected, defines a spectrometer. The spectrometer above described is analogous to the scanning interferometers used in FT spectrum analyzers, which means that, potentially, the spectral distribution of the first and second reflected electromagnetic radiation is also encoded in the output first and second interferograms. Extracting this information from the interferograms requires a strategy to study the non-reproducible nature of the liquid formation and its unpredictable dynamics of the variation of the location of the second surface. Unfortunately, in the spectrometer, the velocity of the displacements or movements of the second liquid surface may fluctuate unpredictably during each scan, which makes impossible to directly associate a fixed length to the time spacing between the data points forming the first and the second interferograms, as needed in order to obtain spectroscopic information from them.

Despite this unpredictability of the shape of the liquid specimen, and in the location of the second surface, spectroscopic information can however be retrieved from the first and second interferograms thanks to the information derivable from the first electromagnetic radiation having a known wavelength and due to the transformation made to the second interferogram which makes the same independent from the instantaneous shape, location and geometry of the second surface.

In the following, some assumptions are made so that the mathematical equations displayed are clearer and simpler. However, these assumptions are not necessary and the same logic applies to the more general situation.

The liquid specimen is considered to be deposited on a tip of an optical fiber, so that the reflected first and second electromagnetic radiation are propagating into the fiber. The tip of the fiber represents the substrate. In addition, the liquid specimen is a liquid droplet. The first surface is thus the fiber-liquid interface. The second surface is the liquid-gas interface where the gas surrounds the droplet (the second surface is the "roundish" upper surface of the droplet).

A polychromatic source directed towards the droplet is considered, source which generates a radiation having different spectral components. The radiation travels within the fiber and impinges on the first surface of the fiber, which is the fiber-liquid interface. The radiation also travels through the liquid droplet and impinges on the second surface, which is the liquid-gas interface of the droplet outer surface.

Each spectral component $I_k$ (where I is the intensity of the radiation) of the incident radiation (with wavenumber k, with k= 1, ..., N) contributes to the output signal as:

$$I_{out}^k(L) = R_1 I_{in}^k + C(L)T_1^2 R_2 I_{in}^k + \sqrt{C(L)T_1^2 R_1 R_2} \cdot I_{in}^k \cos(2kL) \qquad (1)$$

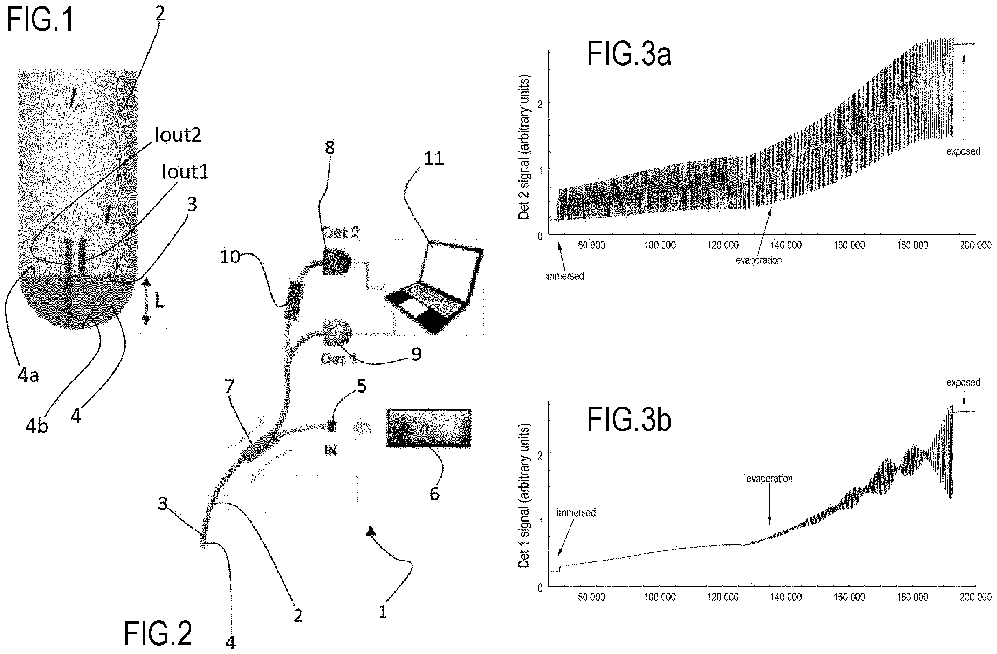

where $R_{1,2}$ ($T_{1,2}$) is the reflectivity, (transmissivity) at the 1st, 2nd droplet interface (see FIG.1), C(L) is a factor between 0 and 1 representing the coupling efficiency of the back-reflected radiation into the fiber mode (C(L)=1 for the reflection at the fiber end facet) and L is the distance between the fiber end and the droplet surface (substantially the maximum distance between the first and second surface). During the droplet's evaporation, the first term of eq. (1) remains constant, the second gives a slowly varying offset (C(L) may vary with droplet's curvature and height), and in the third term the cosine term produces a fast oscillation, completing a fringe every half-wavelength recession of the droplet surface. In the general case of a polychromatic source the total signal is obtained by integrating eq.(1) over the whole spectral span of the radiation:

$$I_{out}(L) = \int R_1 I(k)dk + \int C(L)R_2 T_1^2 I(k)dk + \int \sqrt{C(L)T_1^2 R_1 R_2} \cdot I(k) \cos(2kL)\, dk \qquad (2)$$

$$I_{out}(L) = DC_0 + DC_1(L) + AC(L) \approx DC_1(L) + AC(L)$$

That is

$$DC_0 = \int R_1 I(k)dk$$

$$DC_1(L) = \int C(L)R_2 T_1^2 I(k)dk$$

$$AC(L) = \int \sqrt{C(L)T_1^2 R_1 R_2} \cdot I(k) \cos(2kL)\, dk$$

The signal is thus the sum of three contributions, that from now on will be referred to as $DC_0$, $DC_1(L)$ and $AC(L)$ respectively. $DC_0$ and $DC_1(L)$ can be considered as the "DC component" of the signal, while the $AC(L)$ can be considered as the "AC component" of the signal. $DC_0$ can be considered as a "fixed offset" and it is the intensity of the injected radiation reflected by the first interface. In other words, it is the intensity of the injected source as reflected by the first surface, for example the fiber-liquid interface. In order to experimentally assess its value alone, it can be obtained from the back-reflection of the fiber when completely immersed in the liquid used. In most cases, $DC_0$ can be neglected and $DC \sim DC_1(L)$. The DC component can be thus considered to be only $DC_1(L)$.

The second term $DC_1(L)$ is slowly varying. It corresponds to the intensity of the radiation back-reflected, for example back-reflected in the fiber, by the second surface (for example, in case of a droplet on a fiber, by the surface of the droplet) and it depends on the instantaneous shape and position of the second surface through the coupling efficiency term C(L). This component of the second interferogram depends on the second electromagnetic radiation reflected on the second surface during the variation in location of the second surface only.

The last component $AC(L)$ is a fast-varying component of the interferogram and it depends on the interference of the two backreflected fields from the first surface and the second surface, Indeed, the injected radiation is reflected by the first surface and the second surface, and the two backreflected radiations interfere, This $AC(L)$ term is equivalent to the real part of the Fourier transform (FT) of the incident spectrum I(k) except for the factor $\sqrt{C(L)T_1^2 R_1 R_2}$. Now, $T_1^2$, $R_1$, and $R_2$ only depend on the refractive index of the liquid that forms the droplet, and have a negligible wavelength dependence, so they can be brought out of the integral and regarded as a scaling factor. The term $\sqrt{C(L)}$ instead is potentially a source of non-reproducibility for the retrieved spectra, because it depends on the droplet instantaneous shape and evaporation dynamics. To remove it, the information contained in the DC(L) signal is preferably used. First step is to divide the AC(L) signal by the square root of the DC(L) part of the signal:

$$\frac{AC(L)}{\sqrt{DC(L)}} = \frac{\int \sqrt{C(L)T_1^2 R_1 R_2} \cdot I(k)\cos(2kL)\,dk}{\sqrt{\int C(L)R_2 T_1^2 I(k)\,dk}} \qquad (3)$$

In the hypothesis that C(L) does not depend on the wavenumber k, the terms $\sqrt{C(L)}$ in the numerator and denominator can be extracted from the integrals and cancel out. The new signal becomes:

$$AC_1(L) = \frac{\int \sqrt{T_1^2 R_1 R_2} \cdot I(k)\cos(2kL)\,dk}{\sqrt{\int R_2 T_1^2 I(k)\,dk}} \qquad (4)$$

Now, the denominator represents the square root of the total intensity of the injected radiation reflected by the second surface into the fibre mode when C(L)=1 (perfect coupling). This condition occurs at the very end of the evaporation process, when the droplet is so thin that all the intensity reflected by its outer boundary can be assumed to couple back into the fibre. The denominator is thus just $\sqrt{DC(0)}$ . By multiplying for this value, the following equation is obtained:

$$AC_2(L) = \sqrt{\frac{DC(0)}{DC(L)}}\, AC(L) = \int \sqrt{T_1^2 R_1 R_2} \cdot I(k)\cos(2kL)\,dk \qquad (5)$$

**The signal** $AC_2$(L) is now independent from the specific liquid specimen's features (in particular from the second surface) and differs from the Fourier Transform of the spectrum of the radiation source only by the factor $\sqrt{T_1^2 R_1 R_2}$ , that depends on the nature of the liquid used, and represents a fixed response function of the spectrometer.

The above equations (1) - (5) are substantially the same if the interferogram is due not to the evaporation of a droplet, but to a change of the position of the second surface of the liquid specimen. The term C(L) depends on the position and shape of the second surface, which is in general an air liquid interface.

In practice, the second interferogram recorded during the change of position and shape of the second surface, such as the droplet surface during the droplet evaporation, is an array of *M* intensity values in time. The time spacing between successive datapoints is *dt.* In order to retrieve the spectrum by applying a Fourier Transform this time-domain interferogram must be converted in a length scale L, like eq. (1).. However, because the changes in the second surface's shape and position are not predictable (i.e., the evaporation velocity fluctuates unpredictably), it is impossible to directly associate a fixed length dL to the time spacing dt between the datapoints obtained in the interferogram which is measured. For this reason, the first interferogram from a known-wavelength first electromagnetic radiation impinging on the liquid interface at the same time is needed, so that the second interferogram can be considered as following eq. (1). The idea is that for a given reference wavelength $\lambda_{ref}$, the distance between a minimum (maximum) and a subsequent minimum (or maximum) of the first interferogram is $ndL = \lambda_{ref}/2$ disregarding of the time taken to scan the distance dL. This allows to find a time-length conversion that, can be easily transferred to the second interferogram. This is possible preferably thanks to the synchronicity of the two first and second interferograms. In the following, a description of the preferred but not necessary steps necessary to extract information from the two recorded interferograms is given.

"Time domain" refers to the analysis of mathematical functions, physical signals or environmental data, with respect to time. In the time domain, the signal or function's value is known for all real numbers, for the case of continuous time, or at various separate instants in the case of discrete time.

"Length domain" is equal to the above definition where "time" is replaced by "length".

Further, time-length transformation which transforms the time scale of the first interferogram into a length scale indicates a transformation in which the interferogram f(t) in the time domain becomes an interferogram in the length domain f'(L). The "length" referred to is the distance between the first and the second surface of the liquid specimen. Reference to the "optical length" is made.

A first, optional, step relates to the preparation of the first and second interferograms. As mentioned above, the first and second interferograms are two arrays of datapoints, called first and second array, respectively. The first and second array of datapoints are in the time domain. Both the first and second arrays are preferably reversed so that their first point corresponds to the instant when the liquid surface is totally evaporated.

Furthermore, before or after the time-length transformation mentioned, the dependence from the shape of the second surface needs to be eliminated from the recorded second interferogram. This means eliminating the dependency from C(L) of the oscillating term of eq. (1), namely AC(L). Indeed, if the second interferogram keeps the dependence on the second surface shape geometry or position, it is substantially almost impossible to obtain meaningful spectroscopic data from the second interferogram because it is substantially impossible to control or predict the behaviour of the second surface.

For this reason, the second interferogram is modified according to equations (3) - (5) so as to remove the dependency on the C(L). The transformation of the second interferogram to remove the dependency of the C(L) can be done before or after the time-length transformation, because the same equations (1) - (5) can be written substantially identically in the time domain.

Furthermore, the two transformations are independent one from the other. The second interferogram is a collection of N points having each an abscissa and an ordinate. Therefore, each p-th point of the second interferogram can be written as $(t_p, I_p)$ where p = 1 ... N, with N the number of points of the second plurality of data, I the intensity of the interferogram in the p-th point and $t_p$ the time when the intensity $I_p$ is detected. The time-length transformation, which transform the time into a length, operates only on the abscissa of the points which transforms as

$$\left(t_p, I_p\right) \rightarrow \left(L_p, I_p\right)$$

So that the plot of the second interferogram is a plot of intensities over length and not over time, following a transformation of $t_p \rightarrow L_p$. The values of the ordinate of the points, i.e., the value in the y axis (the "$I_p$" values), stay the same. This "time-length" transformation, as said, operates only on the abscissas of the points of the second interferogram. This transformation is detailed below.

On the other hand, the transformation to remove the C(L) dependency operates only on the ordinates of the points forming the second interferogram. Being abscissas and ordinates perpendicular to each other, the two transformation do not "interact" and their order can be changed.

If the transformation to remove the dependency from the C(L) is performed before the time - length transformation, preferably the following transformation takes place.

A subroutine preferably detects all the maxima and minima of the second interferogram, and selects the points whose value is halfway (in intensity) between the maxima and the minima. In this way, an "array of midpoints" can be created for the second interferogram.

By interpolating the array of midpoints, the DC(L) part of the second interferogram is obtained (please see equation (2)). This DC part (the value $DC_1(L) = \int C(L) R_2 T_1^2 I(k) dk$ ) is then subtracted from the original data (i.e. the DC(L) component of the second interferogram is subtracted from the second interferogram) to obtain a second AC(L) interferogram. As mentioned, the value $DC_0$ may need to be removed as well, depending on the cases (in some cases, it can be neglected). In case it needs to be removed, from the points forming the second interferogram, a constant intensity is removed, such as an offset. This offset is calculated measuring the intensity of the second radiation back-reflected from the first surface when the first surface is completely immersed in the liquid which is then forming the liquid specimen.

In formulas, the subtraction of the offset calculated as above mentioned from $I_{out}(L) = DC_0 + DC_1(L) + AC(L)$ means that the remaining factors are $DC_1(L)$ and AC(L).

As shown in equations (1) - (4), the transformation needed in the second interferogram is such that the second interferogram becomes an oscillating function around a constant value. That is, removing the dependency on the $DC_1(L)$ part as shown in equation (3) results in an oscillating function around a constant, and more preferably around zero.

The transformation is such that the resulting modified second interferogram is a function which oscillates around a constant value (preferably zero) and it is independent from the C(L) value, that is, it is indpeende t from the shape of the liquid specimen, which means in particular that preferably it is independent on the shape and position of the second surface, the air/liquid interface.

In order to do that, the quantity $DC_1(L)$ is calculated from the signal, it is subtracted from the signal forming the second interferogram to obtain AC(L) and then the same AC(L) is divided by the square root of $DC_1(L)$ so that equation (3) is obtained, which is independent from C(L). In other words, using this transformation, the dependency from the C(L) is removed and the resulting interferogram is not dependent any more from the geometry and shape of the second surface and information on the second electromagnetic radiation can be obtained. If the dependency on the second surface's geometry remains, it is substantially impossible to obtain meaningful spectroscopic information from the second interferogram.

Preferably, the step of removing the dependency on the shape of the second surface from the second interferogram includes removing from the second plurality of data forming the second interferogram the component of the second interferogram depending on the second surface during the variation in location of the second surface.

More preferably, the step of removing the dependency on the shape of the second surface from the second interferogram comprises:

- representing each data point p, where p =1, ..., N, of the second interferogram with its coordinates $(t_p, I_p)$, where tp is

the time at which the point p is taken and Ip the intensity of the signal at time tp;

- calculating for the second set of data forming the second interferogram the array of the maxima and the minima of the set;

- for each maximum ($t_{max,i}$, $I_{max,i}$) and subsequent minimum ($t_{min,i}$, $I_{min,i}$), calculating the midpoint, that is, calculating

$$MP(i) = \left\{ \frac{t_{min,i} - t_{max,i}}{2}, I_{max,i} - \frac{I_{max,i} - I_{min,i}}{2} \right\}$$

forming an array of midpoints;

- interpolating the array of midpoints MP(i) with a function $f_{interpolationMP}(t)$;

- subtracting from each point of the second plurality of data the interpolating function, so that for each point (tp, Ip) of the second interferogram the new coordinates of the point are (tpnew, Ipnew), where

$$tpnew = tp$$

$$Ipnew = Ip - f_{interpolationMP}(tp).$$

With this transformation, the function AC(t) is obtained. The array of midpoints is substantially an array in which each point is formed using the data of a minimum and a maximum of the second interferogram. The minimum and maximum forming each midpoint are adjacent minimum and maximum, that is, they belong to the same fringe. They may be called "nearest neighbour" minimum and maximum. The abscissa of the midpoint is the middle of the fringe, that is, the abscissa of the midpoint MP(i) is the point in the middle between the abscissa of the maximum and the abscissa of the subsequent minimum. The ordinate of the midpoint is the ordinate of the maximum from which "half of the fringe" is removed.

This array of midpoints containing several midpoints depending on the number of maxima and minima of the second interferogram is then interpolated, creating a continuous function $f_{interpolationMP}(t)$. This function is the DC component, that is, when subtracting $f_{interpolationMP}(t)$ to the points of the second interferogram, AC(t) is obtained.

Preferably then, the points forming AC(t) are divided by the square root of $f_{interpolationMP}(t)$ so that equation (4) (in time) is obtained, which is independent from the shape of the second surface.

In summary, the transformation entails:

- determining the slow varying component of the second interferogram DC, either before or after the time-length transformation, slow varying with respect to the fast varying component AC, as per eq. (1);
- subtracting the slow varying component from the second interferogram obtaining a subtracted second interferogram;
- dividing the subtracted second interferogram by the square root of the slow varying component DC.

In order to be able to perform immediately a Fourier transform of the resulting function and obtain the desired spectroscopic information on the second wavelength, then the last interferogram obtained, which corresponds to eq. (4), is preferably multiplied by the square root of $f_{interpolationMP}(t = t_0)$, which is the value of $f_{interpolationMP}(t)$ at the instant $t_0$ at which the evaporation completes. In this way, an equivalent of equation (5) is obtained.

Then, a time-length transformation of the first (reference) interferogram is performed. The goal is now to transform the time axis of the first interferogram into a length axis whose values represent the instantaneous distance between the fixed first surface and the moving second surface (i.e. the instantaneous interferometer's optical path length difference), that is the distance between the first and the second surface that changes with time due to the variation in location of the second surface, for example due to evaporation. In other words, it is desired to transform the first (and as well the second) array of datapoints in the time domain in a first (and second) array of datapoints in the length domain. The basic notions to consider are that the first point of the first array corresponds to a distance between the first and second surface L = 0 (because at that point the first and second surface coincides, for example the droplet is evaporated completely) and it is the first maximum of the interferogram. The distance in time between two consecutive fringes corresponds to a delta in optical length equal to delta l= one reference wavelength $\lambda_{ref}$. The distance referred to here is the optical distance.

In the first interferogram (in the time domain) the various zero points, i.e. the points where the fringes go through zero, are not periodic, because their location depends on the movements of the second surface, for example on the evaporation rate. However, in the length domain, the points where the fringes pass through zero have a fixed spacing, because it means that the second surface has received by an amount $\Delta L = \frac{\lambda_{ref}}{2n}$. The positions of all the zeroes of the AC first interferogram in the time domain are stored in an array of zeros, called *zero[i]*. The distance between two consecutive zeros is half a fringe, which in spatial coordinates is $\frac{\lambda_{ref}}{2n}$, half a wavelength of the reference radiation (the reference radiation is the wavelength of the first electromagnetic radiation used as a reference). In other words, the points in which a fringe passes through zero are not at the same distance with respect to each other in the time domain (the second surface does not move at a constant speed, e.g., the droplet can evaporate at different rates) but they are evenly spaced in the length domain where, each time the interferogram's curve passes through zero, it means that the droplet has decreased his size of the same optical length equal to $\frac{\lambda_{ref}}{2}$.

The next step is thus to assign a spatial coordinate to every point of the first interferogram, that is, to each point of the first array. The assignment of the spatial coordinate takes place as follows. For the p-th point of the first array, the unique integer i is found such that zeroes[i]<p<zeroes[i+1]. then the following coordinate $x_p$ is assigned to the point p:

$$x_p = \frac{\lambda_{ref}}{4} + (i-1)\frac{\lambda_{ref}}{2} + \frac{p-zero[i]}{zero[i+1]-zero[i]}\frac{\lambda_{ref}}{2}. \qquad (6)$$

where $\frac{\lambda_{ref}}{4}$ is the spatial coordinate of the first zero, $(i-1)\frac{\lambda_{ref}}{2}$ is the number of half wavelengths before the point p, and the last term represents the fraction of half-wavelength corresponding to the position of the point p within the i-th half fringe.

The above is applied to all p points forming the first plurality of data forming the first interferogram so as to obtain a first interferogram in the length domain (cm scale).

After the time-length transformation described above, the same transformation of eq. (6) is transferred to the second interferogram in order to obtain its spectrum.

The first and the second interferograms are perfectly synchronous (the substrate and the liquid specimen are irradiated by the first and second electromagnetic radiation at the same time, so that the first and second interferogram are also recorded at the same time), so the length scale can be transferred directly from the first to the second interferogram: the p-th point of the second interferogram has the same spatial coordinate of the p-th point of the first interferogram because the first and the second electromagnetic radiation impinges on the first and second surfaces at the same time.

In the length-domain, the datapoints of both the first and second interferogram are not equally spaced, because they were recorded at a constant time separation dt (thus they are equally spaced in the time domain), and evaporation is not constant in time.

Indeed, from the above, with the transformation given by eq. (6), the "zeros" in the first and second interferograms in the length domain are equally spaced, but not the experimental data. The experimental data (the first and second arrays of datapoints) were taken at a constant frequency, i.e. they were equally spaced in the time domain. In order to obtain a set of datapoints which are equally spaced in the length domain, an interpolation and a resampling is needed.

The arrays of points in the length domain obtained using the transformation of eq. (6) is interpolated in order to obtain a continuous function. Given this continuous function, a new array of datapoints is selected, which are equally spaced in the length domain (given a continuous function, any array of discrete datapoints can be selected). Preferably, the second interferogram is then resampled with a fixed resolution, given by the new selected array.

The second interferogram is now made of equally spaced datapoints in the length domain (cm scale).

In other words, the transformation of equation (6) is applied to all points of the second interferogram, so that there is a transformation of the abscissas of the points of the second interferogram.

If before this time-length transformation, the DC part has not been removed from the second interferogram, this removal can be performed after the transformation because, as said, the two transformations are independent from each other.

More preferably, the step of removing the dependency on the shape of the second surface from the second interferogram comprises:

- representing each data point p, where p =1, ..., N, of the second interferogram with its coordinates ($L_p$, $I_p$), where Lp is the position of the second surface at which the point p is taken and Ip the intensity of the signal at that position;

- calculating for the second set of data forming the second interferogram the array of the maxima and the minima of the set;

- for each maximum ($L_{max,i}$, $I_{max,i}$) and subsequent minimum ($L_{min,i}$, $I_{min,i}$), calculating the midpoint, that is, calculating

$$MP(i)=\left\{\frac{L_{min,i}-L_{max,i}}{2}, I_{max,i}-\frac{I_{max,i}-I_{min,i}}{2}\right\}$$

forming an array of midpoints;

- interpolating the array of midpoints MP(i) with a function $f_{interpolationMP}(L)$;

- subtracting from each point of the second plurality of data the interpolating function, so that for each point (Lp, Ip) of the second interferogram the new coordinates of the point are (Lpnew, Ipnew) where

$$Lpnew=Lp$$

$$Ipnew = Ip - f_{interpolationMP}(Lp).$$

With this transformation, the function AC(L) is obtained. The array of midpoints is substantially an array in which each point is formed using the data of a minimum and a maximum of the second interferogram. The minimum and maximum forming each midpoint are adjacent minimum and maximum, that is, they belong to the same fringe. The abscissa of the midpoint is the middle of the fringe, that is, the abscissa of the midpoint is the point in the middle between the abscissa of the maximum and the abscissa of the subsequent minimum. The ordinate of the midpoint is the ordinate of the maximum from which "half of the fringe" is removed.

**This array** of midpoints containing several midpoints depending on the number of maxima and minima of the second interferogram is then interpolated, creating a continuous function $f_{interpolationMP}(L)$. This function is then used to remove from the second interferogram the DC(L) component, that is, calculated the $f_{interpolationMP}(L)$, then to the points of the second interferogram this function (which is equivalent to the $DC_1(L)$ function) is subtracted.

The resulting points are substantially AC(L).

Preferably then, the points forming AC(L) are divided by the square root of $f_{interpolationMP}(L)$ so that equation (4) is obtained, which is independent from the shape of the second surface.

In order to be able to perform immediately a Fourier transform of the resulting function and obtain the desired spectroscopic information on the second wavelength, the latter interferogram is multiplied by the value $f_{interpolationMP}(L=0)$ and an equivalent of equation (5) is obtained. The $f_{interpolationMP}(L = 0)$ is the value of the interpolation function of the midpoints when the second surface has reached the first surface (for example, the droplet has completely evaporated).

This second interferogram after all these transformations is:

$$AC2(L) = AC(L) * \sqrt{\frac{DC(0)}{DC(L)}}.$$

A discrete Fourier Transform algorithm may be applied to switch to the conjugate variable ($cm^{-1}$) and thus obtain the spectrum of the second electromagnetic radiation. A Fourier Transform can be applied to the new array of datapoints of the second interferogram because they are equally spaced in the length domain.

Equations (1) to (6) along with the above-described analysis show that the variability in location of a surface (second surface) with respect to a fixed first surface, the second surface being defined by a liquid specimen, can be exploited to realize a simple but reliable interferometer, without moving parts and thus usable in all possible conditions. The equipment needed is very small in size and thus portable. In addition, because no movable parts are needed, it can be used also where electromagnetic sources are not available. Simple phenomena, such as a droplet's evaporation, capillary effect, emptying of a container, can be used to form an interferometer.

All the above equations apply also in different configurations, not only in case of a liquid droplet. For example, on the tip of a fiber a small container can be placed. The container, opened on the top, may have an outlet. Filling the container from the top while the outlet is closed defines an upper level of the liquid in the container. The upper level of the liquid is the second surface, while the bottom of the container in contact with the tip of the fiber defines the first surface. The first surface is thus a substrate-liquid interface, while the second interface is a liquid-gas interface, in case the container is surrounded by gas, such as air. The first and second electromagnetic radiation travel in the fiber and then impinge the first interface, travel through the liquid specimen and then impinge the second interface. When the outlet is opened, the upper level of liquid in the container varies its location, because the amount of liquid in the container is continuously reduced, due to the liquid exiting the container. Therefore, while the container empties, the position of the second surface changes. The second surface coincides with the first surface when there is no more liquid in the container. The equations (1) - (6) are the same also for this case.

In a further embodiment, the tip of the fiber defines the substrate. An open end of capillary faces the substrate. The opposite end of the capillary may be immerged in a liquid tank. The meniscus formed in the capillary by the liquid can be considered as the second surface. Thus in this case the first surface (i.e. at the tip of the fiber) is a substrate-gas interface, and the second surface is a gas-liquid interface. The first and second electromagnetic radiation coming from the fibre impinge first on the first surface, travel into the gas gap between the substrate and the second surface and then impinge the second interface. The second surface has a varying location: while the liquid rises in the capillary due to capillary effect, the meniscus changes its location along the capillary, till it hits the tip of the fiber. The second surface coincides with the first surface when the meniscus hits the tip of the fiber. Equations (1) - (6) apply to this embodiment as well.

From the above, it is clear that a liquid specimen, such as a droplet, that defines a second surface which changes location, and a substrate, such as a tip of an optical fiber, defining a first surface, act as a scanning interferometer that can be used to retrieve a low-resolution spectrum of a radiation delivered into the fiber. A series of strategies are devised in order to extract reproducible spectral information from liquid specimen whose formation and change in shape is intrinsically unique. First, a single-wavelength reference (first electromagnetic radiation of known wavelength) interferogram is recorded synchronously to the interrogating radiation interferogram (second electromagnetic radiation at unknown wavelength) and used to straighten the time-domain axis of the interferometer scan. Then, the AC part of the interferogram is normalized by its DC part, that only carries information on the geometrical coupling efficiency, in order to cancel out the interferogram features connected to the non-reproducible nature of the droplet.

While on one hand the resolution demonstrated is comparable to that of other miniaturized spectrometers, such as MEMS-based or liquid-crystal based devices, the liquid specimen spectrometer beats any existing spectrometer in terms of cost and portability. Indeed, the evaporation-driven scanning arm makes the system extremely robust, while the total cost and footprint of the setup just add up to the cost and dimensions of the two detectors. More in general, the possibility to extract spectral information from distorted interferograms such as those of a liquid specimen changing "shape" allows to envision a whole range of different microspectrometer configurations not necessarily making use of an optical fiber, with sessile droplets sitting on **engineered** surfaces, or liquid interferometers where the scan is driven by a capillary force, or a container that is emptied.

Preferably, spectroscopic information, such as the unknown characteristic of the second electromagnetic radiation, are obtained from the transformed second interferogram. The second interferogram has been transformed from the time domain to the length domain using the time-length transformation. The resulting interferogram is then preferably further processed to obtain spectroscopic information about the second electromagnetic radiation.

Preferably, the step of varying the location of the second surface with respect to the first surface includes varying the location of the second surface until the second surface becomes coincident with the first surface. In this way, the "longest" first and second interferograms are retrieved, allowing a better precision. Preferably, the "droplet" is completely evaporated. Preferably, the liquid rises in the capillary till the meniscus formed by the liquid hits the tip of the fibre located at the end of the meniscus. Preferably, the container is completely emptied so that no liquid is present in the container any more.

Preferably, the first and the second interferogram are synchronous. In the embodiment presented, this happens automatically due to the fact that the first and the second radiation impinge the first and second surface at the same time.

Preferably, the method comprises the steps of:

o impinging the liquid specimen with N additional electromagnetic radiations to be analysed, each radiation of the N radiation having a wavelength, so that each of the N electromagnetic radiations reflects on the first and second surface;

o wherein the step of detecting a second plurality of data, forming a second interferogram, includes detecting a second plurality of data, forming a second interferogram, having a second plurality of fringes relative to the interference of the reflections of the second and of the N additional electromagnetic radiations on the first and on the second surface during evaporation.

The method is not limited to two components of radiation, that is, it is not limited to $I_k$ with k= 1 (for the radiation having a known wavelength) and k=2 (for the radiation having unknown wavelength). Equations (1) - (6) are valid for any N components of the radiation, as long as one of them has a known wavelength. A spectrum of an unknown radiations having N unknown wavelengths can be thus studied. Thus, the time-length transformation is applied to the data forming the second interferogram which is formed by radiation having N different wavelengths impinging on the first and second surface at the same time.

A single second interferogram having as fringes relative to the interference of the reflections of the second radiation on the first and second surface and of the interference of the reflection of each of the N additional radiations on the first and second surface is formed. To this second interferogram, the time-length transformation is applied.

Preferably, the method comprises the steps of:

o providing a broadband source having N wavelengths;

o separating a fraction of the reflected power and filtering a wavelength from it with a known filter so as to form the first electromagnetic radiation having a known wavelength;

o providing the N electromagnetic radiations to be analysed.

The first electromagnetic radiation having a first known wavelength and the second electromagnetic radiation may be emitted by two distinct sources, or by a single broadband source. The a separated fraction of the broadband source can be thus filtered with a known filter, creating the first electromagnetic radiation having a known wavelength.

Preferably, providing a liquid specimen includes providing a liquid droplet. In order to form a relatively small quantity of liquid, a droplet may be formed. For example the droplet may be formed on the tip of an optical fibre. As shown above, the shape of the droplet is irrelevant due to the fact that it has minimal relevance in the equations (see equations (4)) and/or the remaining part of the equation which are droplet-shape dependent can be filtered out. The formation of a droplet is also very easy and does not require specific equipment.

Preferably, providing a liquid specimen includes providing a capillary filled with liquid having a first free end and a second end, the first end facing the substrate. The meniscus in the capillary defines the second surface. The variation of the location of the second surface is due to the rise of liquid in the capillary due to capillary effect.

Preferably, providing a liquid specimen includes providing a container filled with liquid in contact to the substrate, the container having an outlet. The upper level of liquid in the container defines the second surface. The variation of the location of the second surface is achieved emptying the container via the outlet.

Preferably, providing a liquid specimen includes providing a liquid specimen which does not absorb the first or second electromagnetic radiation. The liquid which is chosen preferably does not absorb at the wavelengths of interest, both known and unknown. Liquids such as alcohols or containing **alcohols** are good candidates. Alcohols are organic compounds that carry at least one hydroxyl functional group (C-OH) bound to their aliphatic substructure.

Preferably, providing a liquid specimen includes providing a liquid specimen on a tip of an optical fibre or facing the tip of the optical fibre. In this way, the first and the second electromagnetic radiation are inputted inside the optical fibre and back-reflected in the same due to the two surfaces created by the liquid specimen in contact to the substrate or facing the substrate. The use of optical fibres is preferred because there is no need of aligning optical parts and the back-reflected signals coming from the first and the second electromagnetic radiations are coupled in the same way. The inference between the first and second back-reflected radiations is thus optimal.

Preferably, the first and second electromagnetic radiations are inputted in an optical fibre, the substrate being an end of the optical fibre.

More preferably, the liquid specimen is located in contact with the substrate.

The first and second electromagnetic radiation impinging on the liquid specimen may also travel in free space instead of in a fibre, however suitable lenses may be needed for obtaining a proper interference.

The method includes the step of:

o applying a Fourier Transformation to the second plurality of data forming the second interferogram after the application of the time-length transformation to obtain the spectrum of the second electromagnetic radiation.

The Fourier transform (FT) decomposes a signal function of time into its constituent frequencies. The term Fourier-transform spectroscopy reflects the fact that in all these techniques, a Fourier transform is required to turn the raw data (the second plurality of data) into the actual spectrum. Standard Fourier Transformation techniques can be applied in the method of the invention. Preferably, the Fourier Trasform is a Discrete Fourier Transform. Available algorithms are available in commercial software as Mathematica or Matlab.

The resolution dk of the droplet spectra depends on the length of the recorded interferogram or optical path difference $dk = OPD^{-1} = \frac{1}{2nL}$ (with L the initial height of the droplet). With isopropanol it was possible to record interferograms with more than 700 fringes @$\lambda_{ref}$=1534nm, corresponding to an OPD of 732 microns and a spectral resolution of ~14 cm$^{-1}$. To improve the resolution, one could increase L by collecting a bigger sessile droplet. That could be achieved by either using a larger connector's ferrule, or a liquid with a higher surface tension, shaping a more spherical cap.

Preferably, the method comprises:

o detecting a first plurality of data forming a first interferogram having a plurality of fringes relative to the interference of the reflections of the first electromagnetic radiation on the first and the second surface during varying the location of the second surface includes detecting a signal generated by the interference of the first electromagnetic radiation reflected at the first surface with the first electromagnetic radiation reflected at the second surface in a counter-propagating guided mode; and/or

o detecting a second plurality of data forming a second interferogram having a plurality of fringes relative to the interference of the reflections of the second electromagnetic radiation on the first and the second surface during varying the location of the second surface includes detecting a signal generated by the interference of the second electromagnetic radiation reflected at the first surface with the second electromagnetic radiation reflected at the second surface in a counter-propagating guided mode.

Preferably, the steps of:

o determining, from the position of the fringes in the first interferogram, a time-length transformation which transforms the time scale of the first interferogram into a length scale; and
o applying the time-length transformation to the second plurality of data forming the second interferogram;

include:

o applying the time-length transformation to the second plurality of data forming the second interferogram so as to form a second plurality of transformed data;
o interpolating the second plurality of transformed data.

Preferably, the steps of detecting a first plurality of data forming a first interferogram and detecting a second plurality of data forming a second interferogram are performed using two different detectors.
Two different detectors are used in order to be able to use the information derivable from the first interferogram.
The invention will be further detailed with non-limiting reference to the appended drawings, where:

◦ Fig.1 shows a schematic diagram of droplet interference principle;

◦ Fig. 2 shows a schematic diagram of experimental spectrometer setup operating according to the method of the invention;

◦ Fig. 3a and Fig. 3b are graphs of the first and second plurality of data forming the first and second interferograms obtained for the second electromagnetic radiation and the first electromagnetic radiation as received at the detectors in an example of the invention;

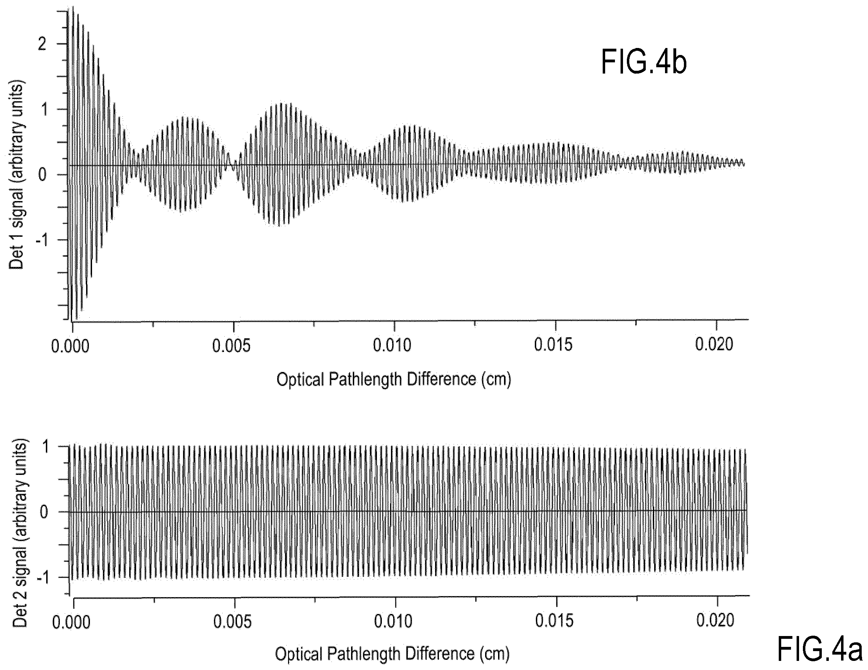

◦ Fig. 4a and Fig. 4b represent the elaborated first and second plurality of data from the first and second plurality of data of figures 3a and 3b, respectively;

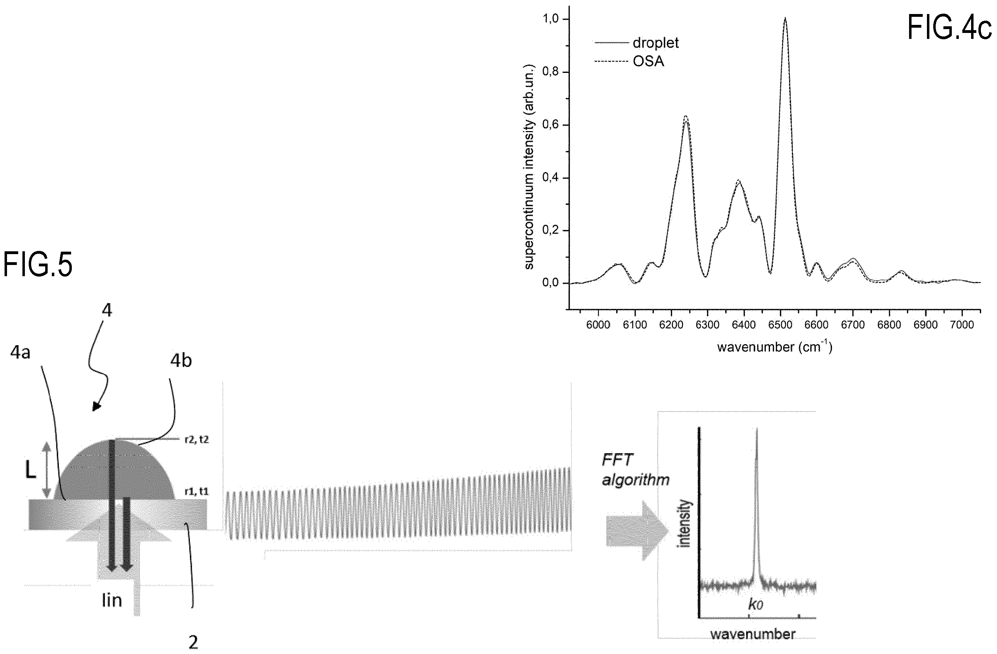

◦ Fig. 4c is the spectrum obtained by a Fourier Transform of figure 3a;

◦ Fig. 5 represents a schematic diagram relating to figure 1;

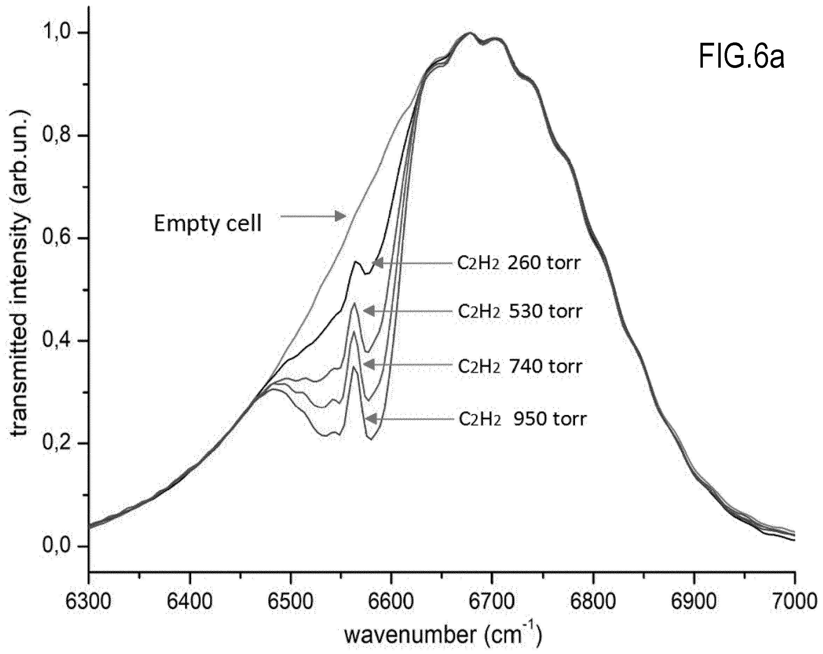

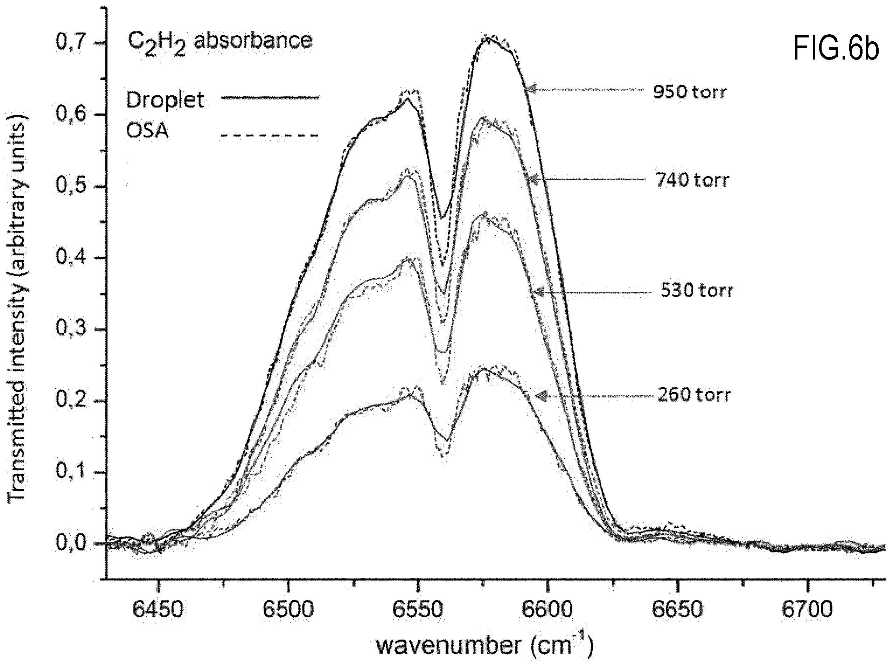

◦ Figs. 6a and 6b represent absorption spectra taken at different pressures obtained using the method of the invention and an optical spectra analyzer;

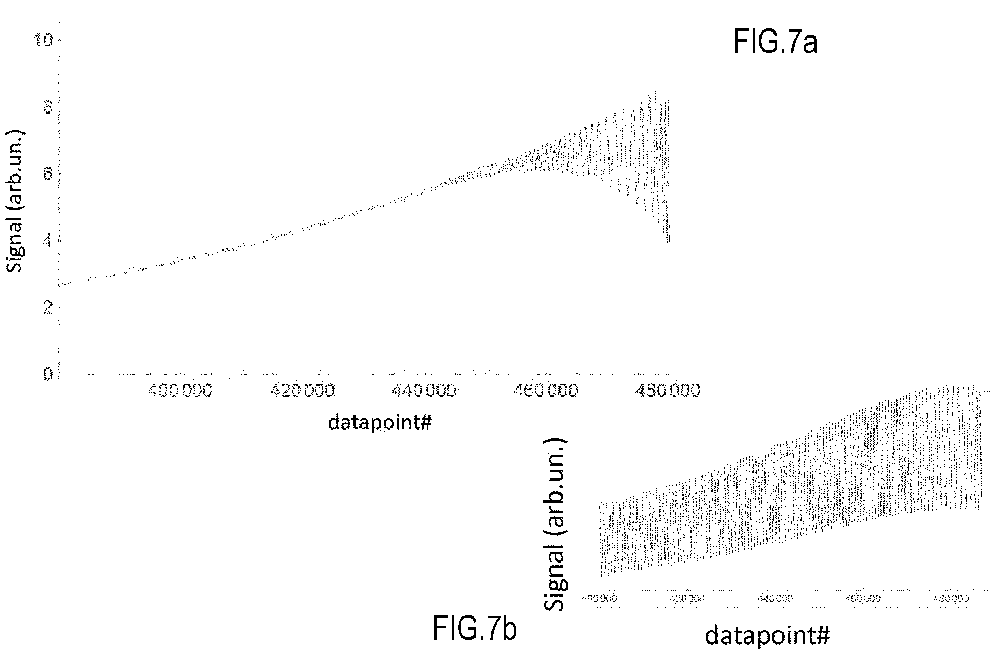

◦ Figs. 7a,b-9 represent steps of the method of the invention;

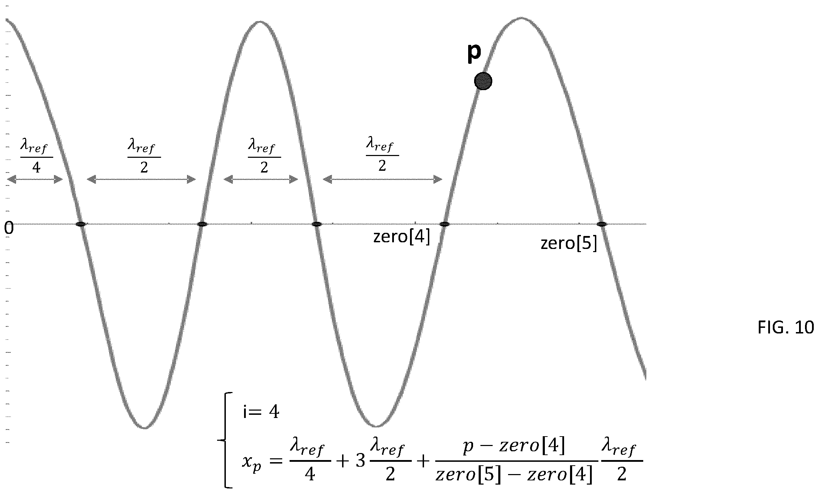

◦ Figs. 10, 11 and 12 represent further steps of the method of the invention; and

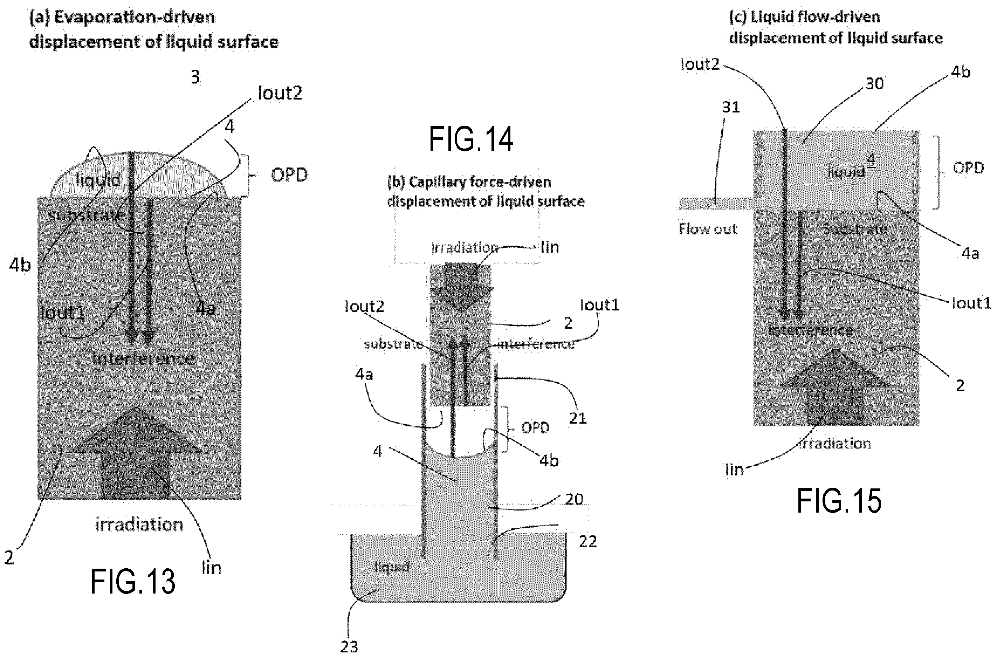

◦ Figs. 13, Fig. 14 and Fig. 15 represent schematic lateral views of different embodiments of spectrometer setups operating according to the method of the invention.

With reference to fig. 2, an interferometer 1 operating according to the method of the invention is shown.
The interferometer 1 includes an optical fibre 2 at one end (or tip) 3 of which a liquid specimen, in the present embodiment a droplet 4 of liquid, is deposited. The thickness of the droplet is indicated with L (see figure 1), which can change with time due to evaporation.

The optical fiber 2 includes an input port 5. A source 6 emitting radiations at several wavelengths is coupled to the input port 5. The radiation $I_{in}$ form the source 6 is backreflected from the droplet 4 into the optical fibre 2 and collected through a fiber-optic circulator 7. Further, the interferometer 1 includes a first and a second detector 8, 9. Most of the circulator 7 output is sent to the first detector 8, except for a narrow spectral slice at $\lambda_{ref}$, isolated by a fiber-splitter and a notch filter 10, which instead reaches the second detector 9. First and second detector 8, 9 could be photodiodes.

The output of first and second detector 8, 9 are connected to a control unit 11 in order to elaborate the received signals according to the method of the invention.

The droplet interference principle is depicted with reference to fig. 1 and fig. 5 (to show different positions of the droplet 4). As shown in figure 1, the droplet 4, formed on the tip 3 of optical fiber 2, is impinged by a radiation $I_{in}$ coming from the optical fiber 2 and generated by source 6. The radiation is reflected both from a first 4a and a second surface 4b of the droplet 4, forming the back-reflected radiation lout1 and lout2 which interfere forming the back-reflected overall radiation $I_{out}$ (with I, the intensity of the radiation is indicated).

In figures 13 - 15 different embodiments of the interferometer 1 of figure 2 are depicted. Figure 13 is the same as figure 1 for a direct comparison with the other two embodiments. In figures 14 and 15, different liquid specimens are shown. The interferometer 1 has the same configuration as in figure 2, but the liquid specimen in figure 14 is an amount of liquid 4 contained in a capillary 20. The capillary 20 includes a first and a second end 21, 22. The fiber 2 is inserted in the first end 21, while the second end 22 is inserted in a tank 23 containing the liquid 4. The liquid 4 in the capillary may rise due to capillary effect. The first surface is the surface 4a between substrate and air, where the substrate is the fiber 2, and the second surface 4b is the interface between liquid and gas. The radiation is reflected both from the first 4a and the second surface 4b, forming the back-reflected radiation lout1 and lout2 which interfere forming the back-reflected overall radiation $I_{out}$ (with I the intensity of the radiation is indicated).

In figure 15, a container 30, preferably open at the top, having an outlet 31 is positioned on top of an end of fiber 2. The interferometer 1 has the same configuration as in figure 2. The container 30 is filled with liquid 4 from the top of the container 30. The second surface 4b is thus the upper level of liquid in the container. The first surface 4a is the substrate-bottom of container - liquid interface. While the container 30 empties, the second surface 4b moves.

With now reference to figure 5, calling $I_{in}$ the incident radiation and $I_{out}$ the backreflected radiation, the following equation applies:

$$I_{out} = |R_1 I_{in}|^2 + \left|T_1^2 R_2 I_{in}\right|^2 + 2\, T_1^2 R_1 R_2 I_{in} \cos(2k_0 L)$$

Where $I_{out}$ is the intensity of the back-reflected radiation, $R_{1,2}$ ($T_{1,2}$) is the reflectivity (trasmissivity) at the 1st,2nd droplet interface 4a and 4b, $k_0$ the wavenumber of the radiation and L the thickness of the droplet (the maximum distance between the first and the second interface).

With reference to figures 7a,b - 9 the elaboration of the resulting signals is described.

The radiation impinging on the droplet 4 is a first electromagnetic radiation and a second electromagnetic radiation, where the first electromagnetic radiation has a known wavelength and the second electromagnetic radiation has unknown properties. Of course, first and second electromagnetic radiations may form a single beam and in this case they are both generated by single source 6. The first and second data forming the first and the second interferograms are shown in figure 7b and 7a respectively. The data shown are, for clarity, only a portion of the total interferograms. Each interferogram includes a plurality of fringes.

First, the second interferogram is considered only, to apply to it the transformation to remove the "DC" component.

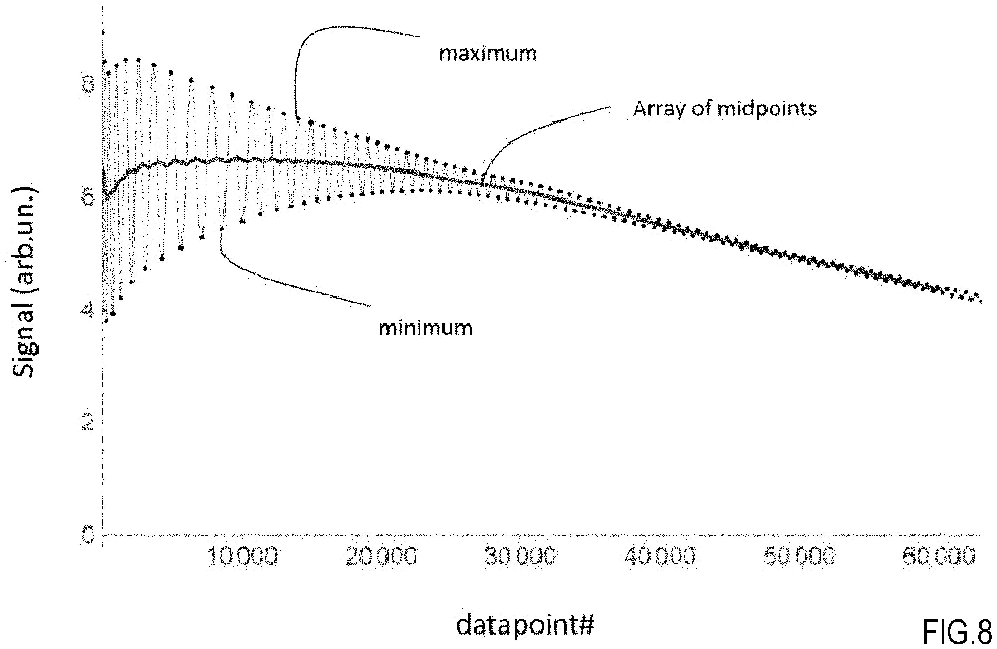

In the second interferogram of figure 7a, is datapoints array reversed, that is, the transformation x = -x is performed (where x is time). Further, the maxima and minima of the second interferogram are detected and are visualized in figures 8 with black points.

From the array of maxima and minima indicated above, an array of midpoints (DC) is obtained, depicted as a central dark line in the figure 8.

Each midpoint is equal to =

$$\left\{ \frac{t_{min,i} - t_{max,i}}{2}, I_{max,i} - \frac{I_{max,i} - I_{min,i}}{2} \right\}$$

The so obtained array of midpoints is interpolated, obtaining a $f_{MPinterpolation}(t)$ (which is equivalent to DC(L)). For each point (xp,yp) of the elaborated second interferogram of figure 8, the value of the interpolation for that specific x value is subtracted (that is, for the p point in graph of figure 8 a new value of the ordinate is obtained)

$$Y_{pnew} = yp - f_{MPinterpolation}(xp)$$

Without changing its xp value.

Then, the resulting AC first and second interferograms, symmetric with respect to the x axis, are normalized by using the factor $\sqrt{\dfrac{DC(0)}{DC(L)}}$.

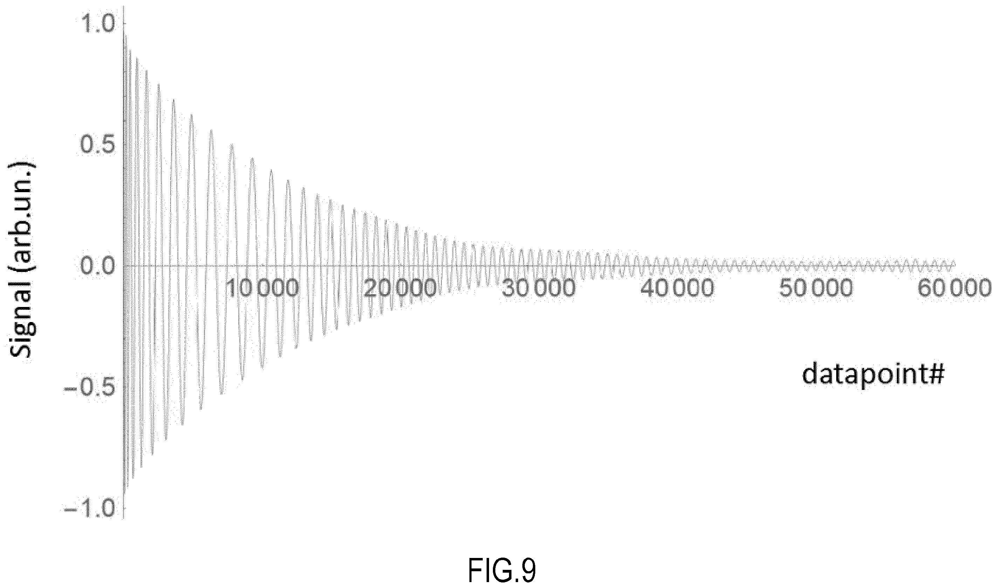

The results of these transformations are shown in figure 9.

With now reference to the transformed first interferogram of figure 7b, a spatial coordinate $x_p$ is assigned to each datapoint of it. An array of datapoints in the length - domain is obtained, forming a first interferogram in the length domain. The transformation is depicted in figure 10 and makes reference to eq. (6).

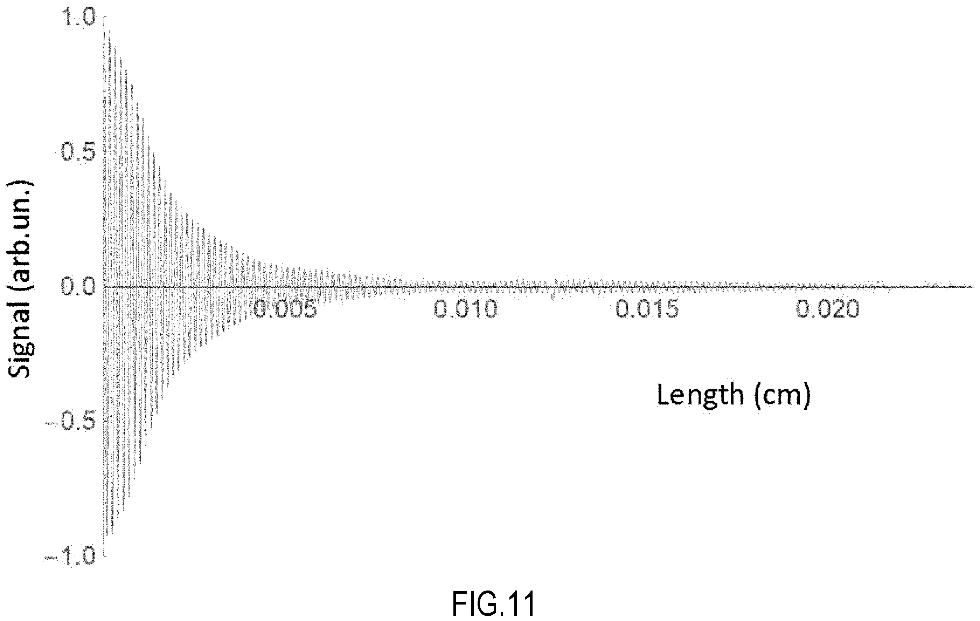

The length scale of the first interferogram is transferred to the second interferogram. Because the two interferograms are synchronous, the p-th point of the second interferogram has the same spatial coordinate of the p-th point of the first interferogram. Applying this transformation of eq. (6) and figure 10 to the second interferogram of figure 9 gives the second interferogram in the length domain of figure 11. Then an Interpolation and resampling takes place to have equally-spaced datapoints in the new array.

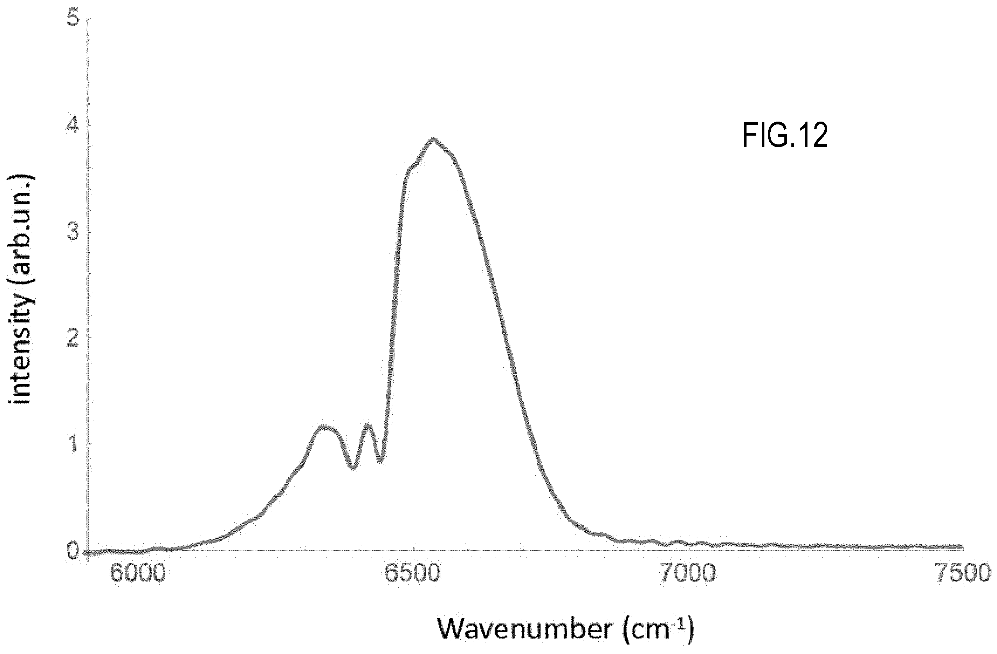

A Fourier transform can be then applied to the second interferogram in the length domain of figure 11 so that the spectrum of figure 12 is obtained.

A Fourier Transform of the radiation $I_{out}$ above described gives a signal having a peak at $k_0$, as visible in figure 5. The above is true for any radiation at any given wavelength.

*Example 1*

The experimental setup used to investigate the evaporating droplet spectrometer is illustrated in fig.1. The radiation comes from a fiber-coupled supercontinuum (SC) source, spanning from 1 to 2 microns. The source and system controlling is for example Menlo Systems FC1500.

A standard Corning© SMF-28 telecom optical fibre is used. A droplet 4 is formed on the tip 3 of the fiber 2.

At each measurement, the optical fiber 2 is extracted from an alcohol bath, and the droplet 4 remains attached to the connector's ferrule. 2-propanol alcohol was selected as a liquid because it has negligible absorption in the near infrared and its evaporation is sufficiently adiabatic not to break the droplet in the process, yet rapid enough to allow capturing a spectrum in a handful of seconds (60-100s typically).

The SC radiation injected in the input port (IN) is back-reflected by the isopropanol droplet 4 and collected through the fiber-optic circulator 7 (Thorlabs 6015-3-APC). Most of the circulator output is sent to an InGaAs detector 8 (Thorlabs D400FC), except for a narrow spectral slice @ $\lambda_{ref}$ (1534nm), isolated by a fibre-splitter and a notch filter 11, which instead reaches a second photodiode 9 (Thorlabs D400FC).

The signals above described, called in the following signals at Det1 and Det2 (detectors 8 and 9), are recorded for the whole evaporation process of the droplet 4. Typical physical dimensions of the isopropanol droplet in our setup are height 0.4mm, diameter 2.5mm. Its complete evaporation takes typically 60-100s.

The recorded signals, shown in figs. 3a and 3b, illustrate the whole droplet formation and evaporation: at the beginning, the fiber 2 is completely immersed in the alcohol and the signal detected by the two detectors 8 (det1), 9 (det 2) corresponds substantially to the Fresnel reflection of the fiber-alcohol interface 4a; as the fiber 2 is extracted from the liquid, a droplet 4 shapes up on the ferrule 3 and starts to evaporate, adding a scanning reflecting surface 4b; the detector signals in this phase map the interference of the reflected fields, which keeps oscillating until the droplet is totally evaporated. Then, the signal reproduces again a DC level because the droplet completely evaporates, now corresponding to the Fresnel reflection of the fiber-air interface. This behavior of the signal, substantially constant, oscillating and then again substantially constant is visible in both figures 3a and 3b.

In order to extract the SC source spectrum by Fourier transform, the interferograms of the det1 and det2 signals must be isolated, AC filtered and transposed into a length scale. As in traditional FT spectrometers, the single-wavelength interferogram is essential for this time-length conversion, because one cycle corresponds to a fixed span of the liquid mirror $dL = n\lambda_{ref}/2$. For this task, it is first necessary to: (a) stretch/compress the time-axis of the reference interferogram in order to make its fringes equally-spaced (which is equivalent to apply the time-length transformation described before); (b) interpolate the straightened array; (c) resample it to obtain a new dataset of N equally-spaced datapoints. In this resampled interferogram, the distance between two successive datapoints is $dL = M\lambda_{ref}/2N$, where M is the number of recorded fringes. Finally, since the det1 and det2 signals are synchronous, the very same transformation can be applied to transpose the signal interferogram into a length scale, neutralize the effect of the scan-rate fluctuations.

In figs 4a and 4b, the interferograms of figs. 3a and 3b are shown after reversing/cutting (L=0 to a chosen interferogram length), AC filtering, transposition into the length domain and DC normalization. Applying a Discrete Fourier transform (DFT) algorithm (such as an algorithm contained in the software package Mathematica© 10) now returns the spectrum of the supercontinuum radiation source 6. Prior to DFT, an additional set of standard manipulations (phase correction, apodization, zero filling) may be optionally carried out to smooth out the output spectrum.

In fig.4c the SC spectrum recorded with the droplet spectrometer (continuous line) superimposed to the same spectrum (dashed line) recorded with a commercial optical analyzer (OSA, model ANDO AQ6317B) are shown. To better appreciate the capability of the droplet to reproduce all the spectral features of the radiation, the spectra of fig. 4a-c are normalized to 1.

In most practical applications, rather than reproducing the absolute wavelength distribution of a radiation source, spectrometers are used to measure the spectral variations caused by the interaction with a sample to retrieve its transmission/reflection spectrum. For this task, the post-interaction spectrum needs to be normalized by the spectrum of the interrogating source alone, typically recorded once and for all.

Example 2

In this example, the use of the spectrometer and the method of the invention for quantitative detection of acetylene absorption is demonstrated. The setup is analogous to Example 1 except now an incoherent radiation source is used: the spontaneous emission of a semiconductor optical amplifier (Thorlabs SOA1013S). The radiation emitted by this source is sent through a 15-cm long acetylene gas cell equipped with inlet, outlet and pressure gauge before entering the spectrometer. The reference radiation (to det2 in fig.1) is obtained by splitting the droplet reflection signal after the circulator and isolating a single wavelength with a notch filter. The cell transmission was analyzed for different gas pressures both with the droplet spectrometer and a Spectrum Analyzer (OSA). The transmission spectra recorded using the method of the invention, shown in fig.6a, clearly show the bell-shaped curve of the spontaneous emission source, partially blocked by the absorption of acetylene at different pressures. In fig.6b, the acetylene absorbance at the different pressures is retrieved by normalization to the empty-cell transmission (spectrum of the source radiation). Now, because the acetylene transmission spectrum and the normalization spectrum are recorded at different times, the capability of reproducing the acetylene absorbance curves represents a severe reproducibility test for the spectrometer.

In figure 6b the absorbance curves obtained with the droplet spectrometer are shown as continuous lines. For comparison, the same absorbance curves obtained with the spectrum analyzer OSA, model ANDO AQ6317B are shown as dashed lines. At all the pressures, the spectra are perfectly consistent, demonstrating that the droplet spectrometer reproduces correctly the shape of the acetylene combination band.

**Claims**

**1.** A spectroscopic method to analyse a radiation having an unknown characteristic, the method comprising:

> o providing a substrate (3) defining a first surface (4a);
> o providing a liquid specimen (4) defining a second surface (4b), said second surface being a liquid-gas interface;
> o impinging the liquid specimen (4) and the substrate (3) with a first electromagnetic radiation having a known wavelength so that the first electromagnetic radiation is reflected on the first and on the second surface (4a, 4b);
> o impinging the liquid specimen (4) and the substrate (3) with a second electromagnetic radiation to be analysed and having an unknown characteristic, the second electromagnetic radiation having a second wavelength, so that the second electromagnetic radiation is reflected on the first and on the second surface;
> o varying the location of the second surface with respect to the first surface;
> o detecting a first plurality of data forming a first time-domain interferogram having a first plurality of fringes relative to the interference of the reflections of the first electromagnetic radiation on the first and on the second surface during the variation in location of the second surface;
> o detecting at the same time a second plurality of data forming a second time-domain interferogram having a second plurality of fringes relative to the interference of the reflections of the second electromagnetic radiation on the first and on the second surface during the variation in location of the second surface;
> o determining, from the position of the fringes in the first interferogram, a time-length transformation which transforms a time scale of the first interferogram into a length scale;
> o applying the time-length transformation to the second plurality of data forming the second interferogram;
> o determining a transformation of the points of the second interferogram so that the second interferogram becomes a signal which fast-varying component is independent from the position and shape of the second surface, and that oscillates around a constant value; and
> o applying such transformation to the second interferogram

o applying a Fourier Transformation to the second plurality of data forming the second interferogram after the application of all the transformations to obtain the spectrum of the second electromagnetic radiation.

2. Method according to claim 1, wherein the step of determining, from the curve formed by the second plurality of data, a transformation of the second interferogram which transforms the same in an oscillating curve around a constant value which is independent from the position and shape of the second surface, comprises:

o determining the slow varying component of the second interferogram, either before or after the time-length transformation;
o subtracting the slow varying component from the second interferogram obtaining a subtracted second interferogram;
o dividing the subtracted second interferogram by the square root of the slow varying component.

3. Method according to claim 1 or 2, including:

o impinging the liquid specimen with N additional electromagnetic radiations to be analysed, each radiation of the N radiations having a wavelength, so that each of the N electromagnetic radiations reflects on the first and second surface;
o wherein the step of detecting a second plurality of data, forming a second interferogram, includes detecting a second plurality of data, forming a second interferogram, having a second plurality of fringes relative to the interference of the reflections of the second and of the N additional electromagnetic radiations on the first and on the second surface during evaporation.

4. Method according to claim 3, comprising the steps of:

o providing a broadband source having N wavelengths;
o separating a fraction of the reflected power and filtering a wavelength from it with a known filter so as to form the first electromagnetic radiation having a known wavelength;
o providing the N electromagnetic radiations to be analysed.

5. Method according to one or more of the preceding claims, wherein providing a liquid specimen (4) includes providing a liquid droplet.

6. Method according to one or more of the preceding claims, providing a liquid specimen (4) includes providing a liquid specimen which does not absorb the first and/or the second electromagnetic radiation.

7. Method according to one or more of the preceding claims, wherein providing a liquid specimen (4) defining a second surface (4a, 4b), includes a providing a liquid specimen in contact with the substrate (3).

8. Method according to one or more of the preceding claims, wherein the step of varying the location of the second surface (4b includes varying the location of the second surface until the second surface (4b) becomes coincident with the first surface (4a).

9. Method according to one or more of the preceding claims, wherein the first and the second interferogram are synchronous.

10. Method according to one or more of the preceding claims when depending on claim 6, wherein:

o detecting a first plurality of data forming a first interferogram having a plurality of fringes relative to the interference of the reflections of the first electromagnetic radiation on the first and the second surface (4a, 4b) during evaporation includes detecting a signal generated by the interference of the first electromagnetic radiation reflected at the first surface with the first electromagnetic radiation reflected at the second surface in a counterpropagating guided mode; or
o detecting a second plurality of data forming a second interferogram having a plurality of fringes relative to the interference of the reflections of the second electromagnetic radiation on the first and the second surface (4a, 4b) during evaporation includes detecting a signal generated by the interference of the second electromagnetic radiation reflected at the first surface with the second electromagnetic radiation reflected at the second surface in a counterpropagating guided mode.

**11.** Method according to one or more of the preceding claims, wherein the step of determining, from curve formed by the second plurality of data, a transformation of the second interferogram which transforms the same in an oscillating curve around a constant value comprises:

o representing each data point p, where p =1, ..., N, of the second interferogram with its coordinates $(t_p, I_p)$, where tp is the time at which the point p is taken and Ip the intensity of the signal at time tp;

o calculating for the second set of data forming the second interferogram the array of the maxima and the minima of the set;

o for each maximum $(t_{max,i}, I_{max,i})$ and subsequent minimum $(t_{min,i}, I_{min,i})$, calculating the midpoint, that is, calculating

o

$$MP(i) = \left\{ \frac{t_{min,i} - t_{max,i}}{2}, I_{max,i} - \frac{I_{max,i} - I_{min,i}}{2} \right\}$$

o forming an array of midpoints;

o interpolating the array of midpoints MP(i) with a function $f_{interpolationMP}(t)$;

o substracting from each point of the second plurality of data the interpolating function, so that for each point (tp, Ip) of the second interferogram the new coordinates of the point are (tpnew, Ipnew) where

$$tpnew = tp$$

$$Ipnew = Ip - f_{interpolationMP}(tp).$$

**12.** Method according to one or more of the preceding claims, wherein the step of determining, from curve formed by the second plurality of data, a transformation of the second interferogram which transforms the same in an oscillating curve around a constant value comprises:

o representing each data point p, where p =1, ..., N, of the second interferogram with its coordinates $(L_p, I_p)$, where Lp is the position of the second surface at which the point p is taken and Ip the intensity of the signal at that position;

o calculating for the second set of data forming the second interferogram the array of the maxima and the minima of the set;

o for each maximum $(L_{max,i}, I_{max,i})$ and subsequent minimum $(L_{min,i}, I_{min,i})$, calculating the midpoint, that is, calculating

$$MP(i) = \left\{ \frac{L_{min,i} - L_{max,i}}{2}, I_{max,i} - \frac{I_{max,i} - I_{min,i}}{2} \right\}$$

o forming an array of midpoints;

o interpolating the array of midpoints MP(i) with a function $f_{interpolationMP}(L)$;

o subtracting from each point of the second plurality of data the interpolating function, so that for each point (Lp, Ip) of the second interferogram the new coordinates of the point are (Lpnew, Ipnew) where

$$Lpnew = Lp$$

$$Ipnew = Ip - f_{interpolationMP}(Lp).$$

**13.** Method according to claim 11 or claim 12, comprising, after the step of subtracting from each point of the second plurality of data the interpolating function, the step of dividing all the points (Lpnew, Ipnew) or (tpnew, Ipnew) by the square root of $f_{interpolationMP}(Lp)$ or $f_{interpolationMP}(tp)$, respectively.

**14.** Method according to any of claims 11 - 13, comprising after the step of subtracting from each point of the second plurality of data the interpolating function, the step of multiplying all the points (Lpnew, Ipnew) or (tpnew, Ipnew) by the square root of $f_{interpolationMP}(t = t_0)$.

**15.** Method according to one or more of the preceding claims, wherein the steps of detecting a first plurality of data forming a first interferogram and detecting a second plurality of data forming a second interferogram are performed using two different detectors

**Patentansprüche**

1. Spektroskopisches Verfahren zur Analyse einer Strahlung, die eine unbekannte Charakteristik aufweist, wobei das Verfahren Folgendes umfasst:

   o Bereitstellen eines Substrats (3), das eine erste Oberfläche (4a) definiert;
   o Bereitstellen einer Flüssigkeitsprobe (4), die eine zweite Oberfläche (4b) definiert, wobei die zweite Oberfläche eine Flüssigkeits-Gas-Grenzfläche ist;
   o Beaufschlagen der Flüssigkeitsprobe (4) und des Substrats (3) mit einer ersten elektromagnetischen Strahlung, die eine bekannte Wellenlänge aufweist, so dass die erste elektromagnetische Strahlung an der ersten und an der zweiten Oberfläche (4a, 4b) reflektiert wird;
   o Beaufschlagen der Flüssigkeitsprobe (4) und des Substrats (3) mit einer zweiten zu analysierenden elektromagnetischen Strahlung, die eine unbekannte Charakteristik aufweist, wobei die zweite elektromagnetische Strahlung eine zweite Wellenlänge aufweist, so dass die zweite elektromagnetische Strahlung an der ersten und an der zweiten Oberfläche reflektiert wird;
   o Variieren der Lage der zweiten Oberfläche in Bezug auf die erste Oberfläche;
   o Erfassen einer ersten Vielzahl von Daten, die ein erstes Zeitbereichsinterferogramm bilden, das eine erste Vielzahl von Streifen relativ zur Interferenz der Reflexionen der ersten elektromagnetischen Strahlung an der ersten und an der zweiten Oberfläche während der Variation der Lage der zweiten Oberfläche aufweist;
   o gleichzeitiges Erfassen einer zweiten Vielzahl von Daten, die ein zweites Zeitbereichsinterferogramm bilden, das eine zweite Vielzahl von Streifen relativ zur Interferenz der Reflexionen der zweiten elektromagnetischen Strahlung an der ersten und an der zweiten Oberfläche während der Variation der Lage der zweiten Oberfläche aufweist;
   o Bestimmen einer Zeitlängentransformation aus der Position der Streifen im ersten Interferogramm, die eine Zeitskala des ersten Interferogramms in eine Längenskala transformiert;
   o Anwenden der Zeitlängentransformation auf die zweite Vielzahl von Daten, die das zweite Interferogramm bilden;
   o Bestimmen einer Transformation der Punkte des zweiten Interferogramms, so dass das zweite Interferogramm zu einem Signal wird, dessen schnell variierende Komponente unabhängig von der Position und der Form der zweiten Oberfläche ist und das um einen konstanten Wert oszilliert; und
   o Anwenden einer solchen Transformation auf das zweite Interferogramm
   o Anwenden einer Fourier-Transformation auf die zweite Vielzahl von Daten, die das zweite Interferogramm nach der Anwendung aller Transformationen bilden, um das Spektrum der zweiten elektromagnetischen Strahlung zu erhalten.

2. Verfahren nach Anspruch 1, wobei der Schritt des Bestimmens einer Transformation des zweiten Interferogramms aus der durch die zweite Vielzahl von Daten gebildeten Kurve, die dieses in eine oszillierende Kurve um einen konstanten Wert transformiert, der unabhängig von der Position und Form der zweiten Oberfläche ist, Folgendes umfasst:

   o Bestimmen der langsam variierenden Komponente des zweiten Interferogramms, entweder vor oder nach der Zeitlängentransformation;
   o Subtrahieren der langsam variierenden Komponente vom zweiten Interferogramm, um ein subtrahiertes zweites Interferogramm zu erhalten;
   o Dividieren des subtrahierten zweiten Interferogramms durch die Quadratwurzel der langsam variierenden Komponente.

3. Verfahren nach Anspruch 1 oder 2, das Folgendes einschließt:

   o Beaufschlagen der Flüssigkeitsprobe mit N zusätzlichen zu analysierenden elektromagnetischen Strahlungen, wobei jede Strahlung der N Strahlungen eine Wellenlänge aufweist, so dass jede der N elektromagnetischen Strahlungen an der ersten und zweiten Oberfläche reflektiert wird;
   o wobei der Schritt des Erfassens einer zweiten Vielzahl von Daten, die ein zweites Interferogramm bilden, das Erfassen einer zweiten Vielzahl von Daten einschließt, die ein zweites Interferogramm bilden, das eine zweite Vielzahl von Streifen relativ zur Interferenz der Reflexionen der zweiten und der N zusätzlichen elektromagnetischen Strahlungen an der ersten und an der zweiten Oberfläche während der Verdampfung aufweist.

4. Verfahren nach Anspruch 3, umfassend die Schritte:

   o Bereitstellen einer breitbandigen Quelle, die N Wellenlängen aufweist;
   o Abtrennen eines Bruchteils der reflektierten Leistung und Filtern einer Wellenlänge daraus mit einem bekannten Filter, um die erste elektromagnetische Strahlung zu bilden, die eine bekannte Wellenlänge aufweist;
   o Bereitstellen der N zu analysierenden elektromagnetischen Strahlungen.

5. Verfahren nach einem oder mehreren der vorhergehenden Ansprüche, wobei das Bereitstellen einer Flüssigkeitsprobe (4) Bereitstellen eines Flüssigkeitstropfens einschließt.

6. Verfahren nach einem oder mehreren der vorhergehenden Ansprüche, wobei das Bereitstellen einer Flüssigkeitsprobe (4) Bereitstellen einer Flüssigkeitsprobe einschließt, die die erste und/oder die zweite elektromagnetische Strahlung nicht absorbiert.

7. Verfahren nach einem oder mehreren der vorhergehenden Ansprüche, wobei das Bereitstellen einer Flüssigkeitsprobe (4), die eine zweite Oberfläche (4a, 4b) definiert, Bereitstellen einer Flüssigkeitsprobe in Kontakt mit dem Substrat (3) einschließt.

8. Verfahren nach einem oder mehreren der vorhergehenden Ansprüche, wobei der Schritt des Variierens der Lage der zweiten Oberfläche (4b) Variieren der Lage der zweiten Oberfläche einschließt, bis die zweite Oberfläche (4b) mit der ersten Oberfläche (4a) zusammenfällt.

9. Verfahren nach einem oder mehreren der vorhergehenden Ansprüche, wobei das erste und das zweite Interferogramm synchron sind.

10. Verfahren nach einem oder mehreren der vorhergehenden Ansprüche in Abhängigkeit von Anspruch 6, wobei:

    o das Erfassen einer ersten Vielzahl von Daten, die ein erstes Interferogramm bilden, das eine Vielzahl von Streifen relativ zur Interferenz der Reflexionen der ersten elektromagnetischen Strahlung an der ersten und der zweiten Oberfläche (4a, 4b) während der Verdampfung aufweist, Erfassen eines Signals einschließt, das durch die Interferenz der an der ersten Oberfläche reflektierten ersten elektromagnetischen Strahlung mit der an der zweiten Oberfläche reflektierten ersten elektromagnetischen Strahlung in einem geführten Gegenausbreitungsmodus erzeugt wird; oder
    o das Erfassen einer zweiten Vielzahl von Daten, die ein zweites Interferogramm bilden, das eine Vielzahl von Streifen relativ zur Interferenz der Reflexionen der zweiten elektromagnetischen Strahlung an der ersten und der zweiten Oberfläche (4a, 4b) während der Verdampfung aufweist, Erfassen eines Signals einschließt, das durch die Interferenz der an der ersten Oberfläche reflektierten zweiten elektromagnetischen Strahlung mit der an der zweiten Oberfläche reflektierten zweiten elektromagnetischen Strahlung in einem geführten Gegenausbreitungsmodus erzeugt wird.

11. Verfahren nach einem oder mehreren der vorhergehenden Ansprüche, wobei der Schritt des Bestimmens einer Transformation des zweiten Interferogramms aus der durch die zweite Vielzahl von Daten gebildeten Kurve, die dieses in eine oszillierende Kurve um einen konstanten Wert transformiert, Folgendes umfasst:

    o Darstellen jedes Datenpunkts p, mit p =1, ..., N, des zweiten Interferogramms mit seinen Koordinaten $(t_p, I_p)$, wobei tp der Zeitpunkt ist, zu dem der Punkt p genommen wird, und Ip die Intensität des Signals zum Zeitpunkt tp ist;
    o Berechnen der Reihe der Maxima und Minima des Satzes für den zweiten Datensatz, der das zweite Interferogramm bildet;
    o für jedes Maximum $(t_{max,i}, I_{max,i})$ und das anschließende Minimum $(t_{min,i}, I_{min,i})$, Berechnen des Mittelpunkts, das heißt, Berechnen von

$$MP(i) = \left\{ \frac{t_{min,i} - t_{max,i}}{2}, I_{max,i} - \frac{I_{max,i} - I_{min,i}}{2} \right\}$$

o Bilden einer Reihe von Mittelpunkten;
o Interpolieren der Reihe von Mittelpunkten MP(i) mit einer Funktion $f_{InterpolationMP}(t)$;
o Subtrahieren der Interpolationsfunktion von jedem Punkt der zweiten Vielzahl von Daten, so dass für jeden Punkt (tp, Ip) des zweiten Interferogramms die neuen Koordinaten des Punktes (tpneu, Ipneu) sind, wobei

$$tpneu=tp$$

$$Ipneu = Ip - f_{InterpolationMP}(tp).$$

12. Verfahren nach einem oder mehreren der vorhergehenden Ansprüche, wobei der Schritt des Bestimmens einer Transformation des zweiten Interferogramms aus der durch die zweite Vielzahl von Daten gebildeten Kurve, die dieses in eine oszillierende Kurve um einen konstanten Wert transformiert, Folgendes umfasst:

o Darstellen jedes Datenpunkts p, mit p =1, ..., N, des zweiten Interferogramms mit seinen Koordinaten $(L_p, I_p)$, wobei Lp die Position der zweiten Oberfläche ist, an der der Punkt p genommen wird, und Ip die Intensität des Signals an dieser Position ist;
o Berechnen der Reihe der Maxima und Minima des Satzes für den zweiten Datensatz, der das zweite Interferogramm bildet;
o für jedes Maximum $(L_{max,i}, I_{max,i})$ und das anschließende Minimum $(L_{min,i}, I_{min,i})$, Berechnen des Mittelpunkts, das heißt, Berechnen von

$$MP(i) = \left\{ \frac{L_{min,i} - L_{max,i}}{2}, I_{max,i} - \frac{I_{max,i} - I_{min,i}}{2} \right\}$$

o Bilden einer Reihe von Mittelpunkten;
o Interpolieren der Reihe von Mittelpunkten MP(i) mit einer Funktion $f_{InterpolationMP}(L)$;
o Subtrahieren der Interpolationsfunktion von jedem Punkt der zweiten Vielzahl von Daten, so dass für jeden Punkt (Lp, Ip) des zweiten Interferogramms die neuen Koordinaten des Punktes (Lpneu, Ipneu) sind, wobei

$$Lpneu=Lp$$

$$Ipneu = Ip - f_{InterpolationMP}(Lp).$$

13. Verfahren nach Anspruch 11 oder Anspruch 12, das nach dem Schritt des Subtrahierens der Interpolationsfunktion von jedem Punkt der zweiten Vielzahl von Daten den Schritt des Dividierens aller Punkte (Lpneu, Ipneu) oder (tpneu, Ipneu) durch die Quadratwurzel von jeweils $f_{InterpolationMP}(Lp)$ oder $f_{InterpolationMP}(tp)$ umfasst.

14. Verfahren nach einem der Ansprüche 11 - 13, das nach dem Schritt des Subtrahierens der Interpolationsfunktion von jedem Punkt der zweiten Vielzahl von Daten den Schritt des Multiplizierens aller Punkte (Lpneu, Ipneu) oder (tpneu, Ipneu) durch die Quadratwurzel von $f_{InterpolationMP}(t = t_0)$ umfasst.

15. Verfahren nach einem oder mehreren der vorhergehenden Ansprüche, wobei die Schritte des Erfassens einer ersten Vielzahl von Daten, die ein erstes Interferogramm bilden, und des Erfassens einer zweiten Vielzahl von Daten, die ein zweites Interferogramm bilden, unter Verwendung von zwei verschiedenen Detektoren durchgeführt werden.

**Revendications**

1. Procédé spectrosique d'analyse de rayonnement de caractéristique inconnue, le procédé consistant à:

◦ fournir un substrat (3) définissant une première surface (4a);
◦ fournir un échantillon de liquide (4) définissant une seconde surface (4b), ladite seconde surface étant une interface liquide-gaz;
◦ soumettre l'échantillon de liquide (4) et le substrat (3) à un premier rayonnement électromagnétique ayant une longueur d'onde connue, de sorte que le premier rayonnement électromagnétique soit réfléchi sur la première et sur la seconde surface (4a, 4b);

∘ soumettre l'échantillon de liquide (4) et le substrat (3) à un second rayonnement électromagnétique à analyser et ayant une caractéristique inconnue, le second rayonnement électromagnétique ayant une seconde longueur d'onde, de sorte que le second rayonnement électromagnétique soit réfléchi sur la première et sur la seconde surface;

∘ faire varier l'emplacement de la seconde surface par rapport à la première surface;

∘ détecter une première pluralité de données formant un premier interférogramme dans le domaine temporel ayant une première pluralité de franges relatives à l'interférence des réflexions du premier rayonnement électromagnétique sur la première et sur la seconde surface lors de la variation de l'emplacement de la seconde surface;

∘ détecter simultanément une seconde pluralité de données formant un second interférogramme dans le domaine temporel ayant une seconde pluralité de franges relatives à l'interférence des réflexions du second rayonnement électromagnétique sur la première et sur la seconde surface lors de la variation de l'emplacement de la seconde surface;

∘ déterminer, à partir de la position des franges dans le premier interférogramme, une transformation temps-longueur qui transforme une échelle de temps du premier interférogramme en une échelle de longueur;

∘ appliquer la transformation temps-longueur à la seconde pluralité de données formant le second interférogramme;

∘ déterminer une transformation des points du second interférogramme de sorte que le second interférogramme devienne un signal dont la composante à variation rapide est indépendante de la position et de la forme de la seconde surface, et qui oscille autour d'une valeur constante; et appliquer une telle transformation au second interférogramme

∘ appliquer une transformation de Fourier à la seconde pluralité de données formant le second interférogramme après l'application de toutes les transformations pour obtenir le spectre du second rayonnement électromagnétique.

2. Procédé selon la revendication 1, dans lequel l'étape consistant à déterminer, à partir de la courbe formée par la seconde pluralité de données, une transformation du second interférogramme qui transforme celui-ci en une courbe oscillante autour d'une valeur constante qui est indépendante de la position et de la forme de la seconde surface, consiste à:

∘ déterminer la composante à variation lente du second interférogramme, avant ou après la transformation temps-longueur;

∘ soustraire la composante à variation lente du second interférogramme pour obtenir un second interférogramme soustrait;

∘ diviser le second interférogramme soustrait par la racine carrée de la composante à variation lente.

3. Procédé selon la revendication 1 ou 2, consistant à:

o soumettre l'échantillon de liquide à N rayonnements électromagnétiques supplémentaires à analyser, chaque rayonnement des N rayonnements ayant une longueur d'onde, de sorte que chacun des N rayonnements électromagnétiques se reflète sur la première et la seconde surface;

o dans lequel l'étape de détection d'une seconde pluralité de données, formant un second interférogramme, consiste à détecter une seconde pluralité de données, formant un second interférogramme, ayant une seconde pluralité de franges relatives à l'interférence des réflexions de la seconde et des N rayonnements électromagnétiques supplémentaires sur la première et sur la seconde surface pendant l'évaporation.

4. Procédé selon la revendication 3, comprenant les étapes consistant à:

o fournir une source à large bande ayant N longueurs d'onde;

o séparer une fraction de la puissance réfléchie et filtrer une longueur d'onde à l'aide d'un filtre connu de manière à former le premier rayonnement électromagnétique ayant une longueur d'onde connue;

o fournir les N rayonnements électromagnétiques à analyser.

5. Procédé selon l'une ou plusieurs des revendications précédentes, dans lequel la fourniture d'un échantillon de liquide (4) comprend la fourniture d'une gouttelette de liquide.

6. Procédé selon l'une ou plusieurs des revendications précédentes, la fourniture d'un échantillon de liquide (4) comprend la fourniture d'un échantillon de liquide qui n'absorbe pas le premier et/ou le second rayonnement électromagnétique.

7. Procédé selon l'une ou plusieurs des revendications précédentes, dans lequel la fourniture d'un échantillon de liquide (4) définissant une seconde surface (4a, 4b), comprend la fourniture d'un échantillon de liquide en contact avec le substrat (3).

8. Procédé selon l'une ou plusieurs des revendications précédentes, dans lequel l'étape de variation de l'emplacement de la seconde surface (4b) comprend la variation de l'emplacement de la seconde surface jusqu'à ce que la seconde surface (4b) coïncide avec la première surface (4a).

9. Procédé selon l'une ou plusieurs des revendications précédentes, dans lequel le premier et le second interférogramme sont synchrones.

10. Procédé selon l'une ou plusieurs des revendications précédentes lorsqu'il dépend de la revendication 6, dans lequel:

   ○ la détection d'une première pluralité de données formant un premier interférogramme ayant une pluralité de franges relatives à l'interférence des réflexions du premier rayonnement électromagnétique sur la première et la seconde surface (4a, 4b) pendant l'évaporation comprend la détection d'un signal généré par l'interférence du premier rayonnement électromagnétique réfléchi sur la première surface avec le premier rayonnement électromagnétique réfléchi sur la seconde surface dans un mode guidé à contre-propagation; ou
   ○ la détection d'une seconde pluralité de données formant un second interférogramme ayant une pluralité de franges relatives à l'interférence des réflexions du second rayonnement électromagnétique sur la première et la seconde surface (4a, 4b) pendant l'évaporation comprend la détection d'un signal généré par l'interférence du second rayonnement électromagnétique réfléchi sur la première surface avec le second rayonnement électromagnétique réfléchi sur la seconde surface dans un mode guidé à contre-propagation.

11. Procédé selon l'une ou plusieurs des revendications précédentes, dans lequel l'étape de détermination, à partir de la courbe formée par la seconde pluralité de données, d'une transformation du second interférogramme qui transforme celui-ci en une courbe oscillante autour d'une valeur constante consistant à:

   ○ représenter chaque point de données p, où p =1, ..., N, du second interférogramme avec ses coordonnées $(t_p, I_p)$, où tp est le moment où le point p est pris et Ip l'intensité du signal au moment tp;
   ○ calculer, pour le second ensemble de données formant le second interférogramme, le tableau des maxima et des minima de l'ensemble;
   ○ pour chaque maximum $(t_{max,i}, I_{max,i})$ et chaque minimum suivant $(t_{min,i}, I_{min,i})$, calculer le point médian, c'est-à-dire calculer

$$MP(i) = \left\{ \frac{t_{min,i} - t_{max,i}}{2}, I_{max,i} - \frac{I_{max,i} - I_{min,i}}{2} \right\}$$

   ○ former un tableau de points médians;
   ○ interpoler le tableau des points médians MP(i) par une fonction $f_{interpolationMP}(t)$;
   ○ soustraire de chaque point de la seconde pluralité de données la fonction d'interpolation, de sorte que pour chaque point (tp, Ip) du second interférogramme, les nouvelles coordonnées du point soient (tpnew, Ipnew), où

$$tpnew = tp$$

$$Ipnew = Ip - f_{interpolationMP}(tp).$$

12. Procédé selon l'une ou plusieurs des revendications précédentes, dans lequel l'étape de détermination, à partir de la courbe formée par la seconde pluralité de données, d'une transformation du second interférogramme qui transforme celui-ci en une courbe oscillante autour d'une valeur constante consistant à:

   ○ représenter chaque point de données p, où p =1, ..., N, du second interférogramme avec ses coordonnées $(L_p, I_p)$, où Lp est la position de la seconde surface à laquelle le point p est pris et Ip l'intensité du signal à cette position;
   ○ calculer, pour le second ensemble de données formant le second interférogramme, le tableau des maxima et des minima de l'ensemble;

∘ pour chaque maximum ($L_{max,i}$, $I_{max,i}$) et chaque minimum suivant ($L_{min,i}$, $I_{min,i}$), calculer le point médian, c'est-à-dire calculer

$$MP(i) = \left\{ \frac{L_{min,i} - L_{max,i}}{2}, I_{max,i} - \frac{I_{max,i} - I_{min,i}}{2} \right\}$$

∘ former un tableau de points médians;
∘ interpoler le tableau des points médians MP(i) par une fonction $f_{interpolationMP}(L)$ ;
∘ soustraire de chaque point de la seconde pluralité de données la fonction d'interpolation, de sorte que pour chaque point (Lp, Ip) du second interférogramme, les nouvelles coordonnées du point soient (Lpnew, Ipnew), où

Lpnew=Lp

Ipnew = Ip - $f_{interpolationMP}$(Lp).

13. Procédé selon la revendication 11 ou la revendication 12, comprenant, après l'étape de soustraction de chaque point de la seconde pluralité de données de la fonction d'interpolation, l'étape de division de tous les points (Lpnew, Ipnew) ou (tpnew, Ipnew) par la racine carrée de $f_{interpolationMP}$(Lp) ou $f_{interpolationMP}$(tp) , respectivement.

14. Procédé selon l'une quelconque des revendications 11 à 13, comprenant après l'étape de soustraction de chaque point de la seconde pluralité de données de la fonction d'interpolation, l'étape de multiplication de tous les points (Lpnew, Ipnew) ou (tpnew, Ipnew) par la racine carrée de $f_{interpolationMP}(t = t_0)$.

15. Procédé selon l'une ou plusieurs des revendications précédentes, dans lequel les étapes de détection d'une première pluralité de données formant un premier interférogramme et de détection d'une seconde pluralité de données formant un second interférogramme sont effectuées à l'aide de deux détecteurs différents.

FIG.1

$I_{in}$ 2

Iout2

Iout1

3

L

4a

4b 4

FIG.2

8

10

11

Det 2

Det 1 9

7 5

IN

6

3

2

4

1

FIG.3a

Det 2 signal (arbitrary units)

2

1

0

80 000   100 000   120 000   140 000   160 000   180 000   200 000

immersed

evaporation

exposed

FIG.3b

Det 1 signal (arbitrary units)

2

1

80 000   100 000   120 000   140 000   160 000   180 000   200 000

immersed

evaporation

exposed

FIG.4b

FIG.4a

EP 4 103 920 B1

# FIG.4c

droplet
OSA

supercontinuum intensity (arb.un.)

1,0
0,8
0,6
0,4
0,2
0,0

6000  6100  6200  6300  6400  6500  6600  6700  6800  6900  7000

wavenumber (cm$^{-1}$)

# FIG.5

4
4a
4b
L
r2, t2
r1, t1
Iin
2

*FFT algorithm*

intensity

$k0$

wavenumber

FIG.6a

EP 4 103 920 B1

FIG.6b

EP 4 103 920 B1

FIG.7a

FIG.7b

EP 4 103 920 B1

FIG.8

FIG.9

EP 4 103 920 B1

FIG. 10

$$i = 4$$

$$x_p = \frac{\lambda_{ref}}{4} + 3\frac{\lambda_{ref}}{2} + \frac{p - zero[4]}{zero[5] - zero[4]}\frac{\lambda_{ref}}{2}$$

FIG.11

FIG.12

(a) Evaporation-driven displacement of liquid surface

FIG.13

(b) Capillary force-driven displacement of liquid surface

FIG.14

(c) Liquid flow-driven displacement of liquid surface

FIG.15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5757488 A

**Non-patent literature cited in the description**

- **PETER E. et al.** Fiber-Optic Evaporation Sensing: Monitoring Environmental Conditions and Urinalysis. *Journal of Lightwave Technology*, 2016, vol. 34 (19), 4486-4492

- **PRETER, E. et al.** Fibre-Optic Evaporation Sensing: Monitoring Environmental Conditions and Urinalysis.. *J. Light. Technol.*, 2016, vol. 34, 4486-4492